# EUROPEAN PATENT SPECIFICATION

(11) **EP 2 000 353 B1**
(45) Date of publication and mention of the grant of the patent: **22.12.2010**
(21) Application number: 06843781.3
(22) Date of filing: 28.12.2006
(51) Int. Cl.: B60N 2/30, A47C 1/025, B60N 2/36

(54) **TIP-UP/DIVE-DOWN TYPE CAR-USE RECLINING SEAT**
HOCH- UND RUNTERKLAPPBARER LIEGESITZ ZUR VERWENDUNG IN AUTOS
SIEGE DE VOITURE INCLINABLE A BASCULEMENT/ABAISSEMENT

(30) Priority: 28.12.2005 JP 2005379045; 06.01.2006 JP 2006001869
(43) Date of publication of application: 10.12.2008
(73) Proprietor: TS Tech Co., Ltd., Asaka-shi, Saitama 351-0012 (JP)
(72) Inventor: ABE, Hirohisa, Tochigi 329-1217 (JP); TSUJIBAYASHI, Toshiyuki, Tochigi 329-1217 (JP)
(74) Representative: Pulieri, Gianluca Antonio
(86) International application number: PCT/JP2006/326412
(87) International publication number: WO 2007/077978

(56) References cited:
- EP-A- 1 407 923
- EP-A- 1 854 659
- WO-A-02/100679
- CA-A1- 2 111 725
- DE-A1- 10 355 819
- FR-A- 2 571 005
- FR-A- 2 851 211
- JP-A- 2002 362 202
- JP-A- 2003 011 707
- JP-A- 2005 212 554
- US-A- 6 139 104
- US-A1- 2004 100 117
- US-A1- 2006 066 123

## Description

### FIELD OF THE INVENTION

The present invention relates to a tip-up/dive-down type reclining seat for a vehicle, which includes a seat back adapted to be pivoted forward and rearward and a seat cushion adapted to be tipped up. The vehicle seat is provided with reclining lock means for releasably locking the seat back so as to prevent the pivotal movement of the seat back and for allowing an angle of the seat back to be adjusted, and tipping-up lock means for releasably locking the seat cushion so as to prevent the tipping-up movement of the seat cushion, and is adapted to be dived down and then stored in a space on a lower step portion of a vehicle body floor.

### BACKGROUND OF THE INVENTION

There is known a tip-up/dive-down type seat for a vehicle, which includes a seat back, a seat cushion capable of being tipped up to the seat back in a substantially vertical posture and tipping-up lock means for releasably locking the seat cushion (Japanese Patent Application Laid-Open Publication No. 2005-212554). The entire seat can be dived down in a condition where the seat cushion is tipped up and the tipping-up lock means is maintained in a locked-state, and then stored in a space on a lower step portion of a vehicle body floor. Moreover, the entire seat can be returned to a used position from the dived down position in a condition where the tipping-up lock means is maintained in an unlocked-state.

The tip-up/dive-down type vehicle seat is not provided with reclining lock means for releasably locking the seat back, which can cause the seat back to be maintained in a substantially vertical posture, allow the seat back to be angularly adjusted and allow the seat back to be brought into a condition where it is allowed to be pivoted forward and releasably locked. In this vehicle seat, the seat back is provided at one side thereof with a latch. The latch is engaged with a striker lock mounted to a side panel of a vehicle body, whereby the seat back is maintained in the substantially vertical posture. The seat cushion can be tipped up to the seat back maintained in the substantially vertical posture.

A further tip-up/ drive-down type vehicle seat substantially corresponding to the one defined in the preamble of claim 1 is known, for example, from DE 103 55 819 A1.

### SUMMARY OF THE INVENTION

It is an object of the present invention to provide a vehicle seat which is provided with reclining lock means for releasably locking a seat back and preventing pivotal movement of the seat back, and tipping-up lock means for releasably locking a seat cushion and preventing tipping-up movement of the seat cushion.

It is another object of the present invention to provide a vehicle seat in which, when reclining lock means is unlocked, tipping-up lock means is also unlocked, which can be dived down and stored, which can be returned to a used position from a dived-down position while allowing the tipping-up lock means and the reclining lock means to be unlocked, and which can be dived down in a condition where a tipped-up posture of a seat cushion is maintained by the tipping-up lock means and the reclining lock means is unlocked.

It is still another object of the present invention to provide a vehicle seat provided with tipping-up lock means which can cause a seat cushion to be positively locked in a tipped-up posture and can be positively unlocked at the time when the seat cushion is to be tipped up.

It is yet another object of the present invention to provide a vehicle seat provided with a stand leg portion which is pivotally supported to a lower portion of a seat cushion of the vehicle seat, can be stored synchronously with tipping-up movement of the seat cushion or diving-down movement of the vehicle seat and can be developed synchronously with returning of the seat cushion or the vehicle seat to a used position

It is still another object of the present invention to provide a vehicle seat in which a seat cushion of the vehicle seat can be pivoted from a used position to a tipped-up position and a middle position between the used position and the tipped-up position and which is provided with tipping-up lock means for releasably locking the seat cushion in the used, middle and tipped-up positions.

In accordance with the present invention, there is provided a tip-up/dive-down type reclining seat for a vehicle having the features set forth in claim 1, the vehicle including a vehicle body floor having an upper step portion and a lower step portion. The tip-up/dive-down type reclining seat comprises a seat back including a pair of first spaced apart side brackets, a seat cushion including a pair of second spaced apart side brackets, a pair of third spaced apart base brackets mounted on the upper step portion, reclining lock means for releasably locking the seat back, the reclining lock means including a pair of reclining lock mechanisms each provided between a lower end portion of corresponding one of the first spaced apart side brackets and corresponding one of the third spaced apart base brackets, so that when the reclining lock mechanisms are locked, the seat back can be locked in a substantially vertical posture, and when the reclining lock mechanisms are unlocked, the seat back is allowed to be pivoted forward and rearward and angularly adjusted, the reclining lock mechanisms including actuating shafts coupled to each other through a connecting shaft, the reclining lock mechanisms being adapted to be unlocked when the actuating shafts are rotated, and adapted to be locked when the actuating shafts are rotated back, the seat cushion being pivotally supported at rear portions of the second spaced apart side brackets thereof to portions of the first spaced apart side brackets which are adjacent lower end portions of the first spaced apart side brackets, by first support pins, so that the seat cushion is adapted to be tipped up, a stand leg portion pivotally supported to forward portions of the second spaced apart side brackets and adapted to be releasably engaged with respect to the lower step portion of the vehicle body floor so as to stand from the lower step portion, tipping-up lock means on at least one of the first spaced apart side brackets and at least one of the second spaced apart side brackets for releasably locking the seat cushion in a tipped-up position, at which the seat cushion becomes opposed to the seat back in a substantially vertical posture, and a used position at which the seat cushion takes a substantially horizontal posture, first releasing means on the at least one of the first spaced apart side brackets and the at least one of the second spaced apart side brackets for unlocking the reclining lock means, and second releasing means on the at least one of the first spaced apart side brackets and the at least one of the second spaced apart side brackets for unlocking the tipping-up lock means. An entire vehicle seat in a condition where the seat cushion is located at the tipped-up position or in a condition where the seat back is pivoted forward with respect to the seat cushion in the used position can be dived down and stored in a space on the lower step portion of the vehicle body floor.

According to the invention, a stopper pin is provided at the at least one of the second spaced apart side brackets so as to be arranged upward of corresponding one of the first support pins, the first releasing means includes a collapsible link bar member coupled at a lower end portion thereof to corresponding one of the actuating shafts of the reclining lock mechanisms, a braking link having a laterally projecting induction pin provided at an upper end thereof and swingably supported at a middle portion thereof to an upper end portion of the collapsible link bar member by a second support pin, the braking link being adapted to be stoppingly engaged with the stopper pin from a downward direction, a first link plate swingably supported at a rearward portion thereof to the at least one of the first spaced apart side brackets by a third support pin and having a circular arc-shaped guide hole extending around the second support pin of the braking link, the induction pin of the braking link being inserted through the guide hole of the first link plate, and a first operating lever coupled to a forward portion of the first link plate via a first wire cable, so that when the first operating lever is pull-operated, the first link plate, the braking link and the collapsible link bar member are pulled up, whereby the reclining lock mechanisms are unlocked and, when the first operating lever is released from a pulled-state, the first link plate, the braking link and the collapsible link bar member come down by gravity, whereby the reclining lock mechanisms are locked, the at least one of the second spaced apart side brackets includes a rear portion having a substantially semicircular arc-shaped edge extending about a first support pin of the at least one of the second side brackets, the tipping-up lock means includes first and second spaced apart cutout teeth provided at the substantially semicircular arc-shaped edge, the first cutout tooth serving as means to facilitate causing of the seat cushion to be locked in the used position and the second cutout tooth serving as means to facilitate causing of the seat cushion to be locked in the tipped-up position, a latch swingably supported at a forward portion thereof to the at least one of the first spaced apart side brackets by a fourth support pin, the latch having a projecting tooth provided at a lower edge of a rearward portion thereof, the projecting tooth being adapted to be selectively and releasably engaged with the first and second cutout teeth, and an engaging step portion formed in an upper region of the rearward portion of the latch, and a cam member having a cam body and a lower portion extending downward from the cam body, the cam member being swingably supported to the at least one of the first spaced apart side brackets by the third support pin of the first link plate with the lower portion thereof being releasably abutted against the engaging step portion of the latch and the second releasing means includes a recess portion formed in the upper region of the rearward portion of the latch and continuing from an edge of the engaging step portion, the recess portion having a depth which is not less than a height of an engaged region between the projecting tooth of the latch and each of the cutout teeth and allows the projecting tooth of the latch to be escapingly disengaged from each of the cutout teeth, a second link plate supported at a rearward portion thereof to the at least one of the first spaced apart side brackets by the third support pin of the first link plate so as to be swingable together with the cam member, the second link plate being formed with an opening hole including hole receiving the induction pin of the braking link, the opening hole having a middle hole edge region against which the induction pin of the braking link is adapted to be engagingly abutted when the entire vehicle seat is located at a used position of the entire vehicle seat, a lower hole edge region toward which the induction pin of the braking link is adapted to be escapingly moved from the middle hole edge region when the seat cushion is tipped up, and an upper hole edge region toward which the induction pin of the braking link is adapted to be escapingly moved when the seat cushion is in the tipped-up condition and the reclining lock means is unlocked, and a second operating lever coupled to a forward portion of the second link plate via a second wire cable, so that when the second operating lever is pull-operated, the cam member is swung up in such a manner that the lower portion of the cam member is disengaged from the engaging step portion of the latch and slips into the recess portion of the latch, and as the cam member is swung up, the latch is swung up in such a manner that the projecting tooth of the latch is disengaged from any one of the first and second cutout teeth and, when the second operating lever is released from a pulled-state, the second link plate, the cam member, and the latch come down by gravity, whereby the projecting tooth of the latch is engaged with any one of the first and second cutout teeth.

In the vehicle seat constructed as discussed above, when the entire vehicle seat is located at the used position thereof and the reclining lock means and the tipping-up lock means are in locked-states, the braking link is stoppingly abutted at the lower end portion thereof against the stopper pin and the induction pin of the braking link is located at the rear end portion of the guide hole formed in the first link plate, so that the used position of the entire vehicle seat is determined.

When the entire vehicle seat is located at the used position thereof and the first operating lever is pull-operated, the first link plate is swung up around the third support pin and the cam member is also swung up together with the swinging-up of the first link plate in such a manner that the lower portion of the cam member is disengaged from the engaging step portion of the latch and slips into the recess portion having the depth which is not less than the engaging region between the projecting tooth of the latch and each of the cutout teeth of the at least one of the second spaced apart side brackets, whereby the latch is swung up in such a manner that the projecting tooth of the latch is disengaged from any one of the cutout teeth and the seat cushion is brought to a condition where the seat cushion is allowed to be tipped up toward the seat back in the substantially vertical posture.

When the tipping-up lock means is unlocked by the second releasing means, the induction pin of the braking link is escapingly moved away from the middle hole edge region of the opening hole of the second link plate, so that even if the induction pin of the braking link is inserted through the second link plate, the second link plate is not pulled up by the induction pin and the reclining lock means is not unlocked.

When the seat cushion is tipped up and the second operating lever is released from the pulled-state, the second link plate, the cam member and the latch come down by gravity and the lower portion of the cam member is engagingly abutted against the engaging step portion of the latch, whereby engagement of the projecting tooth of the latch and any one of the cutout teeth of the at least one of the second side brackets is maintained. Thus, the seat cushion is maintained in the tipped-up posture by the tipping-up lock means.

When the second operating lever is pull-operated in order that the seat cushion is returned to the used position thereof, the tipping-up lock means is unlocked as discussed above. Thus, the seat cushion is brought to the condition where it is allowed to be pivoted toward the used position thereof.

In a condition where the entire vehicle seat is located at the used position thereof and the reclining lock means and the tipping-up lock means are locked, when the first operating lever is pull-operated, the first link plate is swung up around the third support pin. At this time, the induction pin of the braking link is located at the rearward end of the guide hole formed in the first link plate and abutted against the middle hole edge region of the opening hole formed in the second link plate, the second link plate is also swung up synchronously with the swinging-up of the first link plate.

When the first link plate is swung up, the induction pin of the braking link is drawn up through the guide hole and the link bar member coupled at the lower end portion thereof to the corresponding one of the actuating shafts of the reclining lock mechanisms is drawn up, whereby the reclining lock means is unlocked and the tipping-up lock means is also unlocked since the second link plate is swung up as discussed above.

In the condition where the reclining lock means and the tipping-up lock means are unlocked, the seat back can be angularly adjusted rearward. When the first operating lever is released from the pulled-condition after the seat back is angularly adjusted rearward, the first link plate, the braking link, the link bar member, second link plate, the cam member, and the latch come down by gravity. Thus, the entire vehicle seat is maintained in the used position thereof.

Moreover, the seat back is pivoted forward and the entire vehicle seat can be then dived down and stored in the space on the lower step portion of the vehicle body floor. In this case, the first link plate, the braking link, the link bar member, the second link plate, the cam member and the latch cannot come down by gravity during the forward pivotal movement of the seat back, so that the reclining lock means and the tipping-up lock means are maintained in the locked-states. When the entire vehicle seat is to be dived down and stored in the space on the lower step portion of the vehicle body floor, a person causes the seat back to be pivoted forward by a certain extent while holding the seat back with his/her hand, removes his/her hand from the seat back to the seat cushion and can lift the seat cushion down in the space on the lower step portion of the vehicle body floor.

In the condition where the entire vehicle seat is dived down, the reclining lock means and the tipping-up lock means are unlocked, so that the person can cause the entire vehicle seat to be easily returned to the used position thereof by lifting up the entire vehicle seat while holding the seat back with his/her hand.

When the seat cushion is locked in the tipped-up position by the tipping-up lock means, the stopper pin provided at the at least one of the second side brackets is separated from the lower end portion of the braking link and the induction pin of the braking link comes down by gravity and located at the forward end portion of the guide hole formed in the first link plate.

When the first operating lever is pull-operated in order that the seat cushion is dived down together with the seat back from the tipped-up position, the first link plate is swung up and the induction pin of the braking link which is located at the forward end of the guide hole is drawn up by the first link plate, so that the reclining lock means is unlocked as discussed above.

Even if the reclining lock means is unlocked, the tipping-up lock means is maintained in the locked-state, since the second link plate has the opening hole which allows the induction pin of the braking link to be escapingly moved when the seat cushion is located at the tipped-up position and the reclining lock means is unlocked, and the second link plate is not swung up. The tipping-up lock means is maintained in the locked-state, so that the seat cushion is not pivoted with respect to the seat back and can be dived down together with the seat back and the entire vehicle seat can be then stored in the space on the lower step portion of the vehicle body floor.

In the case where the entire vehicle seat is to be dived down and stored in the space on the lower step portion of the vehicle body floor, the person causes the seat back to be pivoted forward by a certain extent while holding the seat back with his/her hand, causes his/her hand to be removed from the seat back to the seat cushion and can lift the seat cushion down in the space on the lower step portion of the vehicle body floor, as discussed above.

In a preferred embodiment of the present invention, an angle of the cam member with respect to the latch is set in such a manner that an angle between a reference line connecting an axial center of the fourth support pin of the latch and an abutment point of the cam member against the engaging step portion of the latch, and a line connecting an axial center of the second support pin of the cam member and the abutment point is kept to be an acute angle, so that engagement between the projecting tooth of the latch and any one of the first and second cutout teeth can be maintained by the angle of the cam member relative to the latch.

In this case, the angle of the cam member with respect to the latch is set in such a manner that the angle between the reference line connecting the axial center of the fourth support pin of the latch and the abutment point of the cam member against the engaging step portion of the latch, and the line connecting the axial center of the second support pin of the cam member and the abutment point is kept to be the acute angle, so that the cam functions as a prop with respect to the engaging step portion of the latch and the latch is held by the cam member so as to be unable to swing. Therefore, even if the person unintentionally tries to cause the seat cushion to be pivoted upward, the engagement between the projecting tooth of the latch and each of the cutout teeth of the at least one of the second side brackets is ensured.

In a preferred embodiment of the present invention, the lower portion of the cam member is formed into a substantially semielliptical shape, the engaging step portion of the latch is formed so as to have a substantially J-shape which allows the lower portion of the cam member to be easily abutted against the engaging step portion of the latch, and the recess portion of the latch is formed so as to have a substantially U-shape which has a depth larger than the height of the engaged region between the projecting tooth and each of the cutout teeth and fits the lower portion of the cam member.

In this case, the lower portion of the cam member is formed into the substantially semielliptical shape, a bottom surface of the engaging step portion of the latch is formed so as to have the substantially J-shape which allows the lower portion of the cam member to be easily abutted against the engaging step portion of the latch, and the recess portion of the latch is formed so as to have the substantially U-shape which has the depth larger than the height of the engaged region between the projecting tooth and each of the cutout teeth and fits the lower portion of the cam member. Therefore, when the second operating lever is pull-operated, the cam member is swung up in such a manner that the lower portion of said cam member is disengaged from the engaging step portion of the latch and slips into the recess portion of the latch, whereby the latch is considerably swung up, so that the projecting tooth of the latch can be positively disengaged from each of the cutout teeth of the at least one of the second side brackets.

In a preferred embodiment of the present invention, the stand leg portion is typically urged toward a stored position under the seat cushion by a spring which is retained at one end thereof to an upper end region of the stand leg portion and retained at the other end thereof to the at least one of the second spaced apart side brackets and the vehicle seat further includes a third wire cable which is coupled at one end portion of a wire thereof to the upper end region of the stand leg portion and coupled at the other end portion of said wire of said third wire cable to the seat back, so that when the tipping-up lock means is unlocked and the seat cushion is tipped up, said wire of the third wire cable is pushed so as to overcome an action of the spring and allow the stand leg portion to be pivoted toward a developed position and as the seat cushion is pivoted toward the tipped-up position, the action of the spring is exerted on the third wire cable.

In this case, the stand leg portion 6 can be pivoted toward the stored position synchronously with the tipping-up movement of the seat cushion and diving-down movement of the entire vehicle seat, and can be pivoted toward the developed position synchronously with returning of the entire seat toward the used position of the entire vehicle seat or returning of the seat cushion toward the first used position.

According to the present invention which is defined in claim 1, there is provided a tip-up/dive-down type reclining seat for a vehicle, the vehicle including a vehicle body floor having an upper step portion and a lower step portion. The tip-up/dive-down type reclining seat comprises a seat back including a pair of first spaced apart side brackets, a seat cushion including a pair of second spaced apart side brackets, a pair of third spaced apart base brackets mounted on the upper step portion, reclining lock means for releasably locking the seat back, the reclining lock means including a pair of reclining lock mechanisms each provided between a lower end portion of corresponding one of the first spaced apart side brackets and corresponding one of the third spaced apart base brackets, so that when the reclining lock mechanisms are locked, the seat back can be locked in a substantially vertical posture, and when the reclining lock mechanism are unlocked, the seat back is allowed to be pivoted forward and rearward and angularly adjusted, the reclining lock mechanisms including actuating shafts coupled to each other through a connecting shaft, the reclining lock mechanism being adapted to be unlocked when the actuating shafts are rotated, and adapted to be locked when the actuating shafts are rotated back, the seat cushion being pivotally supported at rear portions of the second spaced apart side brackets thereof to portions of the first spaced apart side brackets which are adjacent lower end portions of the first spaced apart side brackets, by first support pins, so that the seat cushion is adapted to be tipped up, a stand leg portion pivotally supported to forward portions of the second spaced apart side brackets and adapted to be releasably engaged with respect to the lower step portion of the vehicle body floor so as to stand from the lower step portion, tipping-up lock means on at least one of the first spaced apart side brackets and at least one of the second spaced apart side brackets for releasably locking the seat cushion in a tipped-up position, at which the seat cushion becomes opposed to the seat back in a substantially vertical posture, a used position at which the seat cushion becomes a substantially horizontal posture, and a middle position between the tipped-up position and the used position, first releasing means on the at least one of the first spaced apart side brackets and the at least one of the second spaced apart side brackets for unlocking the reclining lock means, and second releasing means on the at least one of the first spaced apart side brackets and the at least one of the second spaced apart side brackets for unlocking the tipping-up lock means, wherein an entire vehicle seat in a condition where the seat cushion is located at the tipped-up position or in a condition where the seat back is pivoted forward with respect to the seat cushion in the used position can be dived down and stored in a space on the lower step portion of the vehicle body floor.

According to the invention, a stopper pin is provided at the at least one of the second spaced apart side brackets so as to be arranged upward of corresponding one of the first support pins, the first releasing means includes a collapsible link bar member coupled at a lower end portion thereof to corresponding one of the actuating shafts of the reclining lock mechanisms, a first braking link having a laterally projecting induction pin provided at an upper end thereof and swingably supported at a middle portion thereof to an upper end portion of the collapsible link bar member by a second support pin, the first braking link being adapted to be stoppingly at a lower portion thereof abutted the stopper pin from a downward direction, a first link plate swingably supported at a rearward portion thereof to the at least one of the first spaced apart side brackets by a third support pin and having a circular arc-shaped guide hole extending around the second support pin of the braking link and a substantially L-shaped control hole, the induction pin of the braking link being inserted through the guide hole of the first link plate, a second braking link pivotally supported at a middle portion thereof to the first link plate, the second braking link being adapted to be stoppingly abutted at a lower portion thereof against the stopper pin from a direction opposite to the direction from which the lower portion of the first braking link is abutted against the stopper pin, an elongated bar pivotally supported to an upper end of the second braking link and having a wire retaining pin which is provided at a free end of the elongated bar and inserted through the substantially L-shaped control hole of the first link plate, the substantially L-shaped control hole having a vertical hole portion and a horizontal hole portion, and a first operating lever coupled to the wire-retaining pin via a first wire cable, so that when an entire vehicle seat is located at a used position thereof, the first braking link is abutted at the lower portion thereof against the stopper pin with the induction pin being located at a rear end portion of the guide hole and the second braking link is abutted at the lower portion thereof against the stopper pin with the wire retaining pin being located in the horizontal hole portion and, when the seat cushion is pivoted to the middle position, the stopper pin is separated from the stopper pin and the first braking link comes down by gravity in such a manner that the induction pin is moved toward a forward end of the guide hole, and the stopper pin kicks up the second braking link in such a manner that the wire retaining pin is moved toward a connecting hole portion between the horizontal hole and the vertical hole portion and, when the seat cushion is pivoted to the tipped-up position, the stopper pin is separated from the second braking link and the second braking link comes down by gravity in such a manner that the wire retaining pin is moved toward the horizontal hole portion, the at least one of the second spaced apart side brackets includes a rear portion having a substantially semicircular arc-shaped edge extending about a first support pin of the at least one of the second side brackets, the second releasing means includes first, second and third spaced apart cutout teeth provided at the substantially semicircular arc-shaped edge, the first cutout tooth serving as means to facilitate causing of the seat cushion to be locked in the used position, the second cutout tooth serving as means to facilitate causing of the seat cushion to be locked in the tipped-up position, and the third cutout tooth serving as means to facilitate causing of the seat cushion to be locked in the middle position, a latch swingably supported at a forward portion thereof to the at least one of the first spaced apart side brackets by a fourth support pin, the latch having a projecting tooth provided at a lower edge of a rearward portion thereof, the projecting tooth being adapted to be selectively and releasably engaged with the first, second and third cutout teeth, and an engaging step portion formed in an upper region of the rearward portion of the latch, and a cam member having a cam body and a lower portion extending downward from the cam body, the cam member being swingably supported to the at least one of the first spaced apart side brackets by the third support pin of the first link plate with the lower portion thereof being releasably abutted against the engaging step portion of the latch, and the second releasing means includes a recess portion formed in the upper region of the rearward portion of the latch and continuing from an edge of the engaging step portion, the recess portion having a depth which is not less than a height of an engaged region between the projecting tooth of the latch and each of the cutout teeth and allows the projecting tooth of the latch to be escapingly disengaged from each of the cutout teeth, a second link plate supported at a rearward portion thereof to the at least one of the first spaced apart side brackets by the third support pin of the first link plate so as to be swingable together with the cam member, the second link plate being formed with an opening hole including hole receiving the induction pin of the braking link, the opening hole having a middle hole edge region against which the induction pin of the braking link is adapted to be engagingly abutted when the entire vehicle seat is located at a used position of the entire vehicle seat, a lower hole edge region toward which the induction pin of the braking link is adapted to be escapingly moved from the middle hole edge region when the seat cushion is tipped up, and an upper hole edge region toward which the induction pin of the braking link is adapted to be escapingly moved when the seat cushion is in the tipped-up condition and the reclining lock means is unlocked, and a second operating lever coupled to a forward portion of the second link plate via a second wire cable, wherein when the entire vehicle seat is located at the used position of the vehicle seat and the second operating lever is pull-operated in order that the entire vehicle seat is allowed to be dive down, the first link plate is swung up by the wire retaining pin which is located in the horizontal hole portion of the control hole, the second link plate is swung up by the induction pin which is located at a rear end of the guide hole and the middle hole edge region of the opening hole, the link bar member is drawn up through the first braking link, and the cam member is swung up in such a manner that the lower portion of the cam member is disengaged from the engaging step portion of the latch and slips into the recess portion of the latch, whereby the latch is swung up in such a manner that the projecting tooth of the latch is disengaged from any one of the first, second and third cutout tooth, wherein when the entire vehicle seat is located at the used position of the vehicle seat and second operating lever is pull-operated in order that the seat cushion is allowed to be tipped up, the second link plate is swung up, the cam member is swung up in such a manner that the lower portion of the cam member is disengaged from the engaging step portion of the latch and slips into the recess portion of the latch, whereby the latch is swung up in such a manner that the projecting tooth of the latch is disengaged from any one of the first, second and third cutouts, and the induction pin of the first braking link is escapingly moved toward the upper hole edge region of the opening hole, so that the first link plate is not swung up and is idly operated so as not to unlock the reclining lock means, wherein when the seat cushion is located at the tipped-up position and the first operating lever is pull-operated in that the entire vehicle seat is allowed to be dived down, the first link plate is swung up by the wire retaining pin which is located at the horizontal hole portion of the control hole, and the link bar member is drawn up by the first braking link whose induction pin is located at a forward end of the guide hole, whereby the reclining lock means is unlocked, and the induction pin is escapingly moved to the upper hole edge region of the opening hole from the lower hole edge region of the opening hole, so that the second link plate is not swung up and is idly operated so as not to unlock the tipping-up lock means, wherein when the seat cushion is located at the middle position and the first operating lever is pull-operated, the wire retaining pin which is located at the connecting hole portion between the horizontal hole portion and the vertical hole portion of the control hole is moved toward the horizontal hole portion, so that the first link plate is not swung up and is idly operated so as not to unlock the reclining lock means, so that the vehicle seat cannot be dived down, and wherein after the seat back is angularly adjusted rearward or the seat cushion is pivoted to the middle position or the tipped-up position, the first and second operating lever are released from the pulled-states, the first and second link plates, the first and second braking link, the link bar member, the cam member and the latch come down by gravity, whereby the reclining lock means and the tipping-up lock means are locked and, when the entire vehicle seat is dived down, the first and second braking link, the link bar member, the cam member and the latch cannot come down by gravity, so that the reclining lock means and the tipping-up lock means are maintained in unlocked-states.

### BRIEF DESCRIPTION OF THE DRAWINGS

Fig. 1 is a schematic side view of a tip-up/dive-down type reclining seat for a vehicle according to each of first and second embodiments of the present invention;
Fig. 2 is a schematic side view illustrating reclining lock means, tipping-up lock means, and first and second releasing means which are provided at the reclining seat according to the first embodiment;
Fig. 3 is a schematic front view illustrating the reclining lock means, the tipping-up lock means, and the first and second releasing means;
Fig. 4 is a schematic side view of a braking link provided with an induction pin, which is one element of the first releasing means;
Fig. 5 is a schematic view illustrating a latch of the tipping-up lock means;
Fig. 6 is a schematic side view of the tipping-up lock means;
Fig. 7 is a schematic side view of a second link plate of the tipping-up lock means;
Fig. 8 is a schematic side view of a stand leg portion provided at each of the first and second embodiments;
Figs. 9a to 9c are each an explanatory view of a condition of a wire coupled to the stand leg portion, during pivotal movement of a seat cushion of the vehicle seat according to each of the first and second embodiments;
Fig. 10 is a schematic side view which is of assistance in explaining an unlocking operation of the tipping-up lock means;
Fig. 11 is a schematic side view showing an unlocked condition of the tipping-up lock means;
Figs. 12a to 12c are each a schematic side view which is of assistance in explaining tipping-up movement of the seat cushion;
Fig. 13 is a schematic side view which is of assistance in explaining locking operation of the tipping-up lock means;
Fig. 14 is an explanatory view which is of assistance in explaining an unlocking operation of the reclining lock means;
Fig. 15 is an explanatory view which is of assistance in explaining an unlocked-state of the reclining lock means;
Fig. 16 is a schematic side view of the reclining seat which is of assistance in explaining an angularly rearward adjusting operation of a seat back of the vehicle seat according to the first embodiment;
Fig. 17a is a schematic side view of the vehicle seat according to the first embodiment, which is of assistance in explaining diving-down movement of the vehicle seat;
Fig. 17b is a schematic side view of the vehicle seat, which is of assistance in explaining a stored-condition of the vehicle seat;
Fig. 18a is a schematic side view of the first and second releasing means at the time of the diving-down movement of the vehicle seat;
Fig. 18b is a schematic side view of the first and second releasing means at the time of storing of the vehicle seat;
Figs. 19a and 19b are each a schematic side view of the vehicle seat, which is of assistance in explaining returning of the vehicle seat in the stored-condition to a used position;
Fig. 20 is a schematic side view of the tipping-up lock means in a locked-condition;
Fig. 21 is a schematic side view which is of assistance in explaining an unlocking operation of the reclining lock means;
Fig. 22a is an explanatory view of the tipping-up lock means at the time of the diving-down movement of the vehicle seat;
Fig. 22b is a schematic side view which is of assistance in explaining the diving-down movement of the vehicle seat;
Fig. 23 is a schematic side view of the tipping-up lock means just before the diving-down movement of the vehicle seat;
Fig. 24 is a schematic side view of the vehicle seat, which is of assistance in explaining an angularly rearward adjusting operation of the vehicle seat in the tipped-up condition;
Fig. 25 is a schematic fragmentary side view of a side bracket of a seat cushion of a reclining vehicle seat according to the second embodiment of the present invention;
Fig. 26 is a schematic side view of reclining lock means, tipping-up lock means, and first and second releasing means which are provided at the vehicle seat according to the second embodiment;
Fig. 27 is a schematic front view of the reclining lock means, the tipping-up lock means, and the first and second releasing means of the second embodiment;
Fig. 28 is a schematic side view illustrating a first link plate, a second braking link, an elongated bar and a wire retaining pin which are provided at the vehicle seat of the second embodiment;
Fig. 29 is a schematic view which is of assistance in explaining a locked condition of the tipping-up lock means;
Fig. 30 is a schematic side view which is of assistance in explaining an unlocking operation of the reclining lock means;
Fig. 31 is a schematic side view illustrating unlocked-conditions of the reclining lock means and the tipping-up lock means;
Fig. 32 is a schematic fragmentary side view which is of assistance in explaining an unlocked-condition of the tipping-up lock means;
Fig. 33 is a schematic side view which is of assistance in explaining an angularly rearward adjusting operation of the vehicle seat according to the second embodiment;
Fig. 34a is a schematic side view which is of assistance in explaining a diving-down movement of the vehicle seat according to the second embodiment;
Fig. 34b is a schematic side view which is of assistance in explaining storing of the vehicle seat according to the second embodiment;
Fig. 35a is a schematic side view illustrating the first and second releasing means at the time of the diving-down movement of the vehicle seat;
Fig. 35b is a schematic side view illustrating the first and second releasing means at the time of storing of the vehicle seat;
Fig. 36a is a schematic side view of the vehicle seat in the stored-condition;
Fig. 36b is a schematic side view which is of assistance in explaining returning of the vehicle seat in the stored-condition to a used position;
Fig. 37 is a schematic side view which is of assistance in explaining an unlocking operation of the tipping-up lock means;
Fig. 38 is a schematic side view which is of assistance in explaining an tipping-up movement of a seat cushion of the vehicle seat;
Fig. 39 is a schematic side view which is of assistance in explaining a tipped-up condition of the seat cushion;
Fig. 40 is a schematic side view which is of assistance in explaining a locking operation of the tipping-up lock means in the condition shown in Fig. 39;
Fig. 41 is a schematic side view which is of assistance in explaining an unlocking operation of the reclining lock means at the time of diving-down of the vehicle seat in the tipped-up condition;
Fig. 42a is a schematic side view of the vehicle seat during the diving-down movement of the vehicle seat;
Fig. 42b is a schematic side view which is of assistance in explaining an unlocked-condition of the reclining lock means during the diving-down of the vehicle seat;
Fig. 43 is a schematic side view of the vehicle seat in an angularly rearward adjusted-condition;
Fig. 44 is a schematic side view of the reclining lock means, the tipping-up lock means and the first and second releasing means at the time when the seat cushion is located at a tipped-up position;
Fig. 45a is a schematic side view which is of assistance in explaining the reclining lock means when erroneously operated; and
Fig. 45b is a schematic side view of the vehicle seat at the time when the reclining lock means is erroneously operated.

### DETAILED DESCRIPTION OF THE PREFERRED EMBODIMENTS

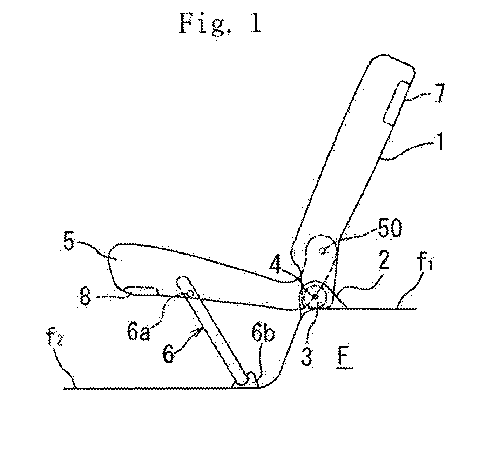

Referring to Fig. 1, there is illustrated a vehicle seat according to a first embodiment of the present invention. The vehicle seat includes a seat back 1 adapted to be pivoted forward and rearward and having a pair of spaced apart side brackets serving as side frame sections of a seat back frame for the seat back 1, a seat cushion 5 pivotally supported to the seat back 1 so as to be capable of being tipped up, reclining lock means including first and second reclining lock mechanisms for releasably locking the seat back 1 and preventing the pivotal movement of the seat back 1 (only first reclining lock mechanism 3 is shown in Fig. 1), the first and second reclining lock mechanisms being constructed in the same manner, first releasing means for unlocking the first and second reclining lock mechanisms 3 and allowing the seat back to be brought to a condition where the seat back is allowed to be pivoted forward and rearward, tipping-up lock means for releasably locking the seat cushion 5 and preventing the tipping-up movement of the seat cushion, and second releasing means for unlocking the tipping-up means and allowing the seat cushion to be brought to a condition where the seat cushion is allowed to be tipped up. The reclining lock mechanisms 3 are provided between lower end portions of the spaced apart side brackets of the seat back 1 and a pair of spaced apart base brackets 2 mounted on an upper step portion f₁ of a vehicle body floor F so as to stand up from the upper step portion f1, so that the seat back 1 is allowed to be releasably locked with respect to the vehicle body floor F by the reclining lock mechanisms 3. As the reclining lock mechanisms 3, there may be employed reclining lock mechanisms which have actuating shafts 4 coupled to each other through a connecting shaft (not shown) which is connected at both ends thereof to the actuating shafts 4, whereby the reclining lock mechanisms are adapted to be synchronously actuated and can carry out unlocking operation by rotation of the actuating shafts 4 and locking operation by rotating-back of the actuating shafts 4 (refer to, for example, Japanese Patent Application Laid-Open No. 2004-173922).

The seat cushion 5 includes a pair of spaced apart side brackets serving as side frame sections of a seat cushion frame for the seat cushion 5. The spaced apart side brackets of the seat cushion 5 are coupled at rear end portions thereof to portions of the side brackets of the seat back 1, which are adjacent the lower end portions of the spaced apart side brackets of the seat back 1, by support pins 50, so that the seat cushion 5 is pivotally supported to the seat back 1 so as to be allowed to be tipped up. The vehicle seat further includes a substantially U-shaped stand leg portion 6 in outline which is pivotally connected at upper end regions of spaced apart vertical portions thereof to lower regions of forward portions of the side brackets of the seat cushion 5 by support pins 6a. A receiving base 6b for receiving and engaging a lower horizontal portion of the stand leg portion 6 is mounted on a lower step portion f₂ of the vehicle body floor F. The stand leg portion 6 is adapted to be releasably engaged at the lower horizontal portion thereof with the receiving base 6b so as to obliquely stand up from the lower step portion f₂ of the vehicle body floor F, whereby when the seat cushion is located at a first used position at which the seat cushion 5 takes a substantially horizontal posture, the seat cushion 5 is horizontally supported by the stand leg portion 6 which is releasably engaged with the receiving base 6b.

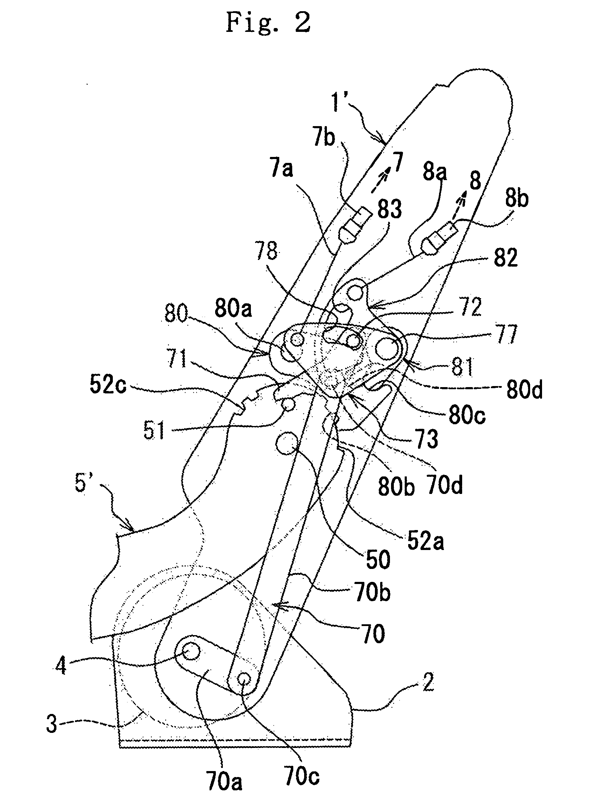

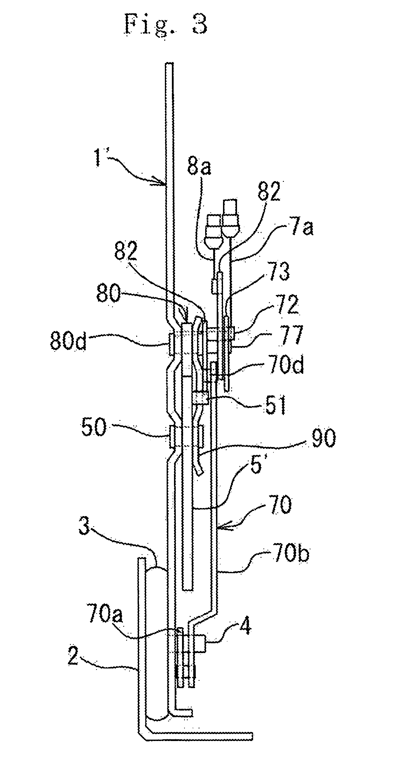

Referring to Figs. 2 and 3, there is illustrated the first releasing means which is provided on one of both sides of the vehicle seat. The first releasing means includes a collapsible link bar member 70, a braking link 71 having a laterally projecting induction pin 72 provided at an upper end thereof, a first link plate 73, and a first operating lever 7 (see Fig. 1).

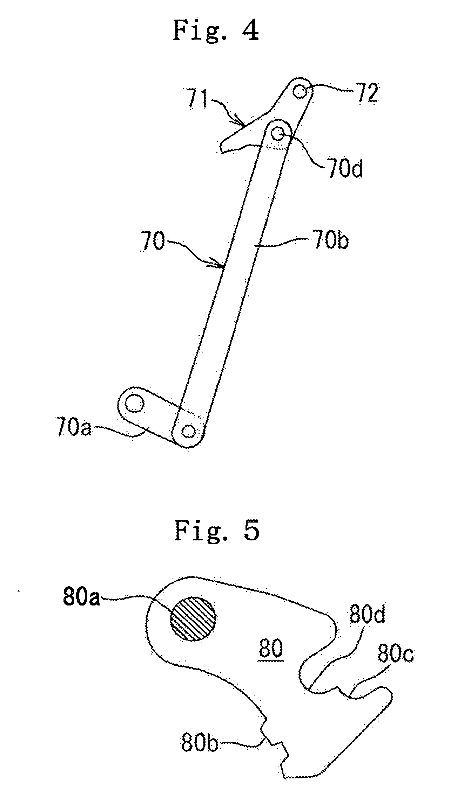

The link bar member 70 includes a lower bar portion 70a coupled at a first end thereof to an actuating shaft 4 of the first reclining lock mechanism 3 which is provided on the one side of the vehicle seat, and an upper bar portion 70b connected at a first end thereof to a second end of the lower bar portion 70a by a support pin 70c and extending upward. As best shown in Fig. 4, the braking link 71 is swingably connected at a substantially middle portion thereof to a second end of the upper bar portion 70b by a support pin 70d. More particularly, the braking link 71 is swingably connected to the upper bar portion 70b with the lower end portion thereof being directed to a stopper pin 51 which is adapted to stoppingly engage the lower end portion of the braking link 71 from a downward direction. As shown in Fig. 2, the stopper pin 51 is provided on one 5' of the side brackets of the seat cushion which is arranged on the one side of the vehicle seat. More particularly, the stopper pin 51 is provided at a portion of the side bracket 5' of the seat cushion so as to be arranged upward of a support pin 50 coupling the side bracket 5' of the seat cushion and one 1' of the side brackets of the seat back which is arranged on the one side of the vehicle seat.

The first link plate 73 is formed into a substantially triangular shape having three lobes, and swingably supported at a rearward lobe thereof to the side bracket 1' of the seat back 1 by a support pin 77. The first link plate 73 has a circular arc-shaped guide hole 78 formed therein so as to extend about the support pin 70d of the braking link 71. The induction pin 72 of the braking link 71 is inserted through the guide hole 78 of the first link plate 73.

The first operating lever 7 of the first releasing means is provided in a recess portion formed in an upper region of a back of the seat back 1 as shown in Fig. 1, and coupled to a forward lobe of the first link plate 73 via a wire 7a of a first wire cable which is inserted through a tube 7b of the first wire cable. When a person pull-operates the first operating lever 7, the wire 7a is drawn upward and the first link plate 73 is swung upward while pulling up the collapsible link member 70 through the braking link 71, whereby the actuating shafts 4 of the reclining lock mechanisms are synchronously rotated. As a result, the reclining lock mechanisms 3 are synchronously brought to unlocked states. In this condition, the person can cause the seat back 1 to be pivoted forward or rearward in one motion and cause the angle of the seat back 1 relative to the vehicle body floor to be adjusted.

More particularly, the pulling operation of the first operating lever 7 causes the entire components including the first link plate 73, the braking link 71 and the link bar member 70 to be pulled up, whereby the actuating shaft 4 of the first reclining lock mechanism 3 is rotated, an actuating shaft of the second reclining lock mechanism is synchronously rotated and the reclining lock means is then unlocked. When the first operating lever 7 is released from the pulled condition, the entire components including the first link plate 73, the braking link 71 and the link bar member 70 come down by gravity and the actuating shafts of the reclining lock mechanisms are synchronously rotated back, whereby the reclining lock mechanisms are locked. Thus, the seat back is locked with respect to the vehicle body floor.

The tipping-up lock means is provided on the one side of the vehicle seat. As shown in Fig. 2, the rear portion of the side bracket 5' of the seat cushion has a substantially semicircular arc-shaped edge extending about the support pin 50 of the side bracket 5' of the seat cushion. The tipping-up lock means includes first and second cutout teeth 52a, 52c, provided at the substantially semicircular arc-shaped edge of the side bracket 5' so as to be spaced apart from each other, and a latch 80 and a cam member 81 which are supported to side bracket 1' of the seat back.1. The first cutout tooth 52a serves as means to facilitate causing of the seat cushion 5 to be locked in the first used position at which the seat cushion takes the substantially horizontal posture. The second cutout tooth 52c serves as means to facilitate causing of the seat cushion to be locked in a tipped-up position at which the seat cushion becomes opposed to the seat back located in a second used position at which the seat back takes a substantially vertical posture.

The latch 80 is pivotally supported at a forward portion thereof to the side bracket 1' of the seat back by a support pin 80a so as to be swingable to an upward direction from a rearward direction. As best shown in Fig. 5, the latch 80 is provided at a lower edge region of a rearward portion thereof with a projecting tooth 80b which is adapted to be selectively and releasably engaged with the first and second cutout teeth 52a, 52c of the side bracket 5' (Fig. 2). In order that the projecting tooth 80b of the latch 80 can be securely engaged with the second cutout tooth 52c of the side bracket 5' of the seat cushion 5, the projecting tooth 80b is configured to include two spaced apart projecting tooth-portions.

The first cutout tooth 52a is configured to include a recess portion which is adapted to receive the projecting tooth 80b of the latch 80 during returning of the seat cushion to the first used position from the tipped-up position and has a length sufficient to allow the seat back in the second used position to be angularly adjusted rearward in the condition where the seat cushion is locked in the first used position. In the illustrated example, a third cutout tooth (not shown) which serves as means to facilitate causing of the seat cushion to be locked in a middle position between the first used position and the tipped-up position of the seat cushion may be provided at the substantially semicircular arc-shaped edge of the side bracket 5' of the seat cushion so as to be arranged between the first and second cutout teeth 52a, 52c.

The cam member 81 includes a cam body and a lower portion extending downward from the cam body. The cam member 81 is swingably supported at the cam body to the side bracket 1' of the seat back 1 by the support pin 77 of the first link plate 73, with the lower portion thereof being directed to an upper region of the rearward portion of the latch 80.

As best shown in Fig. 5, the latch 80 is formed in the upper region of the rearward portion thereof with an engaging step portion 80c against which the lower portion of the cam member 81 is releasably abutted. The lower portion of the cam member 81 is abutted against the engaging step portion 80c of the latch 80, whereby the cam member 81 functions as a prop with respect to the latch 80, so that the engagement between the projecting tooth 80b of the latch 80 and each of the first and second cutout teeth 52a, 52c of the side bracket 5' of the seat cushion 5 can be positively maintained.

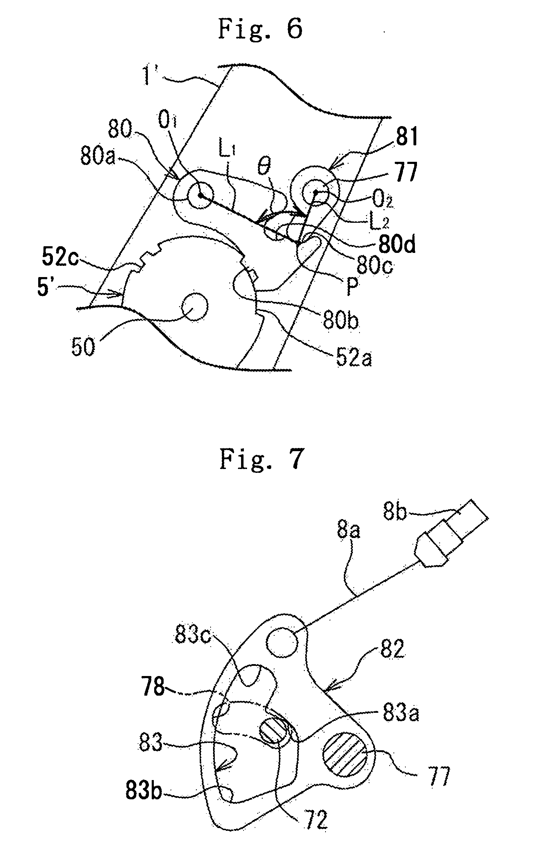

Referring to Fig. 6, an angle of the cam member 81 with respect to the latch 80 is set in such a manner that an angle θ between a reference line L₁ connecting an axial center O₁ of the support pin 80a of the latch 80 and an abutment point P of the cam member 81 against the engaging step portion 80c of the latch 80, and a line L₂ connecting an axial center O₂ of the support pin 77 of the cam member 81 and the abutment point P is kept to be an acute angle. A bottom surface of the engaging step portion 80c of the latch 80 is formed so as to be adjacent the projecting tooth 80b of the latch 80, so that the reference line L₁ is set so as to descend rearward from the axial center O₁ of the support pin 80a of the latch 80.

In the illustrated example, the lower portion of the cam member 81 is formed into a substantially semielliptical shape. Correspondingly to such a shape of the lower portion of the cam member 81, the bottom surface of the engaging step portion 80c of the latch 80 is formed so as to have a substantially J-shape which allows the lower portion of the cam member 81 to be easily abutted against the engaging step portion 80c. Moreover, the substantially J-shaped bottom surface of the engaging step portion 80c is formed so as to have a curve which allows at least half or more region of the lower portion of the cam member 81 to be received by the engaging step portion 80c, so that the lower portion of the cam member 81 can be positively abutted against the engaging step portion 80c of the latch 80 and stably received by the engaging step portion 80c.

The second releasing means for unlocking the tipping-up lock means includes a recess portion 80d (Fig. 5) formed in the upper region of the rearward portion of the latch 80 for allowing of the cam member 81 to be swung up, a second link plate 82, and a second operating lever 8 (Fig. 1). The recess portion 80d formed in the latch 80 extends continuously from an edge of the engaging step portion 80c and may be formed so as to have a depth which is not less than a height of an engaged region between the projecting tooth 80b of the latch 80 and each of the cutout teeth 52a, 52c and allows the projecting tooth 80b of the latch 80 to be escapingly disengaged from each of the cutout teeth 52a, 52c.

In the illustrated example, as shown in Fig. 5, the recess portion 80d of the latch 80 is formed so as to have a substantially U-shape (see Fig. 5) which has a depth larger than the height of the engaged region between the projecting tooth 80d and each of the cutout teeth 52a, 52c and fits the lower portion of the cam 81.

The recess portion 80d of the latch 80 serves to allow the cam member 81 to be swung up in such a manner that the lower portion of the cam member 81 is disengaged from the engaging step portion 80c of the latch 80 and slips into the recess portion 80d. As the cam member 81 is swung up, the latch 80 is swung upwardly in such a manner that the projecting tooth 80b is positively disengaged from any one of the cutout teeth 52a, 52c of the side bracket 5' of the seat cushion.

The latch 80 is held so as to be stably swingable with resort to a holding plate 90 (see Fig. 3) which is supported by the support pin 50 of the side bracket 5' and the support pin 80a of the latch 80.

The second link plate 82 is supported to the side bracket 1' of the seat back by the support pin 77 of the first link plate 73 so as to be swingable together with the cam member 81. As the second link plate 82, there is employed a link plate which is formed so as to have a substantially sector-shape which becomes gradually wider radially from a base portion thereof which is supported by the support pin 77.

The first link plate 73, the cam member 81, and the second link plate 82 are mounted to the support pin 77 which is rotatably supported to the side bracket 1' of the seat back. More particularly, the cam member 81 and the second link plate 82 are fixed to the support pin 77, so that they are swingable together.

Referring to Fig. 7, the second link plate 82 is formed with an opening hole 83 which receives the induction pin 72 of the braking link 71. The opening hole 83 of the second link plate 82 has a middle hole edge region 83a against which the induction pin 72 of the braking link 71 is adapted to be engagingly abutted when the entire vehicle seat is located at a used position of the entire vehicle seat, a lower hole edge region 83b toward which the induction pin 72 of the braking link 71 is adapted to be escapingly moved from the middle hole edge region 83a when the seat cushion is tipped up, and an upper hole edge region 83c toward which the induction pin 72 of the braking link 71 is adapted to be escapingly moved when the seat cushion is in the tipped-up condition and the reclining lock means is unlocked. The term "used position of the entire vehicle seat" means a position at which the seat cushion takes the substantially horizontal posture and the seat back takes the substantially vertical posture.

The second link plate 82 is coupled to the second operating lever 8 via a wire 8a of a second wire cable which is inserted through a tube 8b of the second wire cable. As shown in Fig. 1, the second operating lever 8 is provided in a recess portion formed in a bottom region of a forward section of the seat cushion 5. When the second operating lever 8 is pulled by the person, to thereby cause the second link plate 82 to be drawn up, the seat cushion can be brought to a condition where it is allowed to be tipped up in one motion by the person, as will be discussed in detail hereinafter.

The pulling operation of the second operating lever 8 causes the second link plate 82 and the cam member 81 to be swung, whereby the latch 80 is pulled upward and consequently the tipping-up lock means is brought to an unlocked state. Moreover, when the second operating lever 8 is released from the pulled-state, the entire components which include the second link plate 82, the cam member 81 and the latch 80 come down by gravity, whereby the tipping-up lock means is brought to a locked-state.

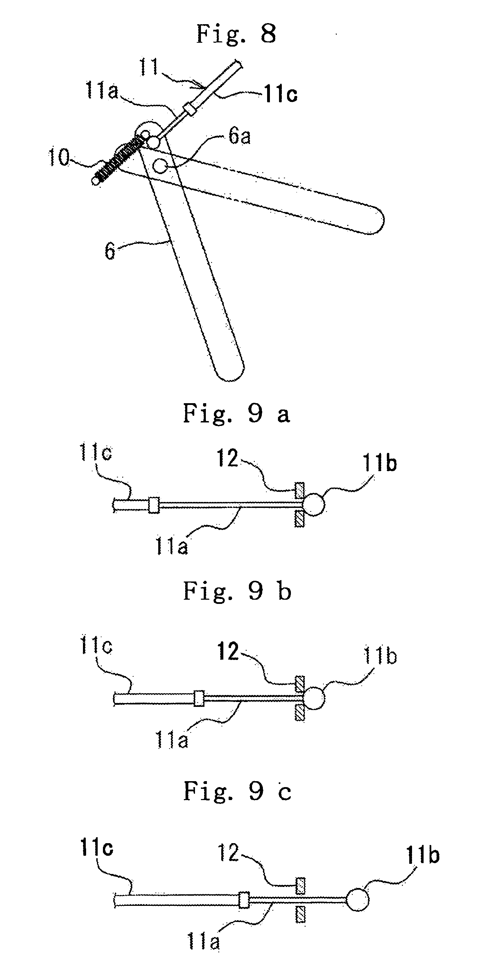

Referring to Fig. 8, the stand leg portion 6 is typically urged toward a stored position under the seat cushion by a tension spring 10 which is a coil spring or a helical torsion spring and retained at one end thereof to an upper end region of one of the spaced apart vertical portions of the U-shaped stand leg portion 6 and retained at the other end thereof to the one of the side brackets of the seat cushion (not shown). Moreover, a wire 11a of a third wire cable 11 which is inserted through a tube 11c of the third wire cable 11 is coupled at one end portion thereof to the upper end region of the vertical portion of the stand leg portion 6 and coupled at the other end portion thereof (not shown) to the seat back.

Referring now to Figs. 9a to 9c, the other end portion of the wire of the third wire cable 11 is supported to a retaining piece 12 which is provided at a suitable portion of the seat back frame. The other end portion of the wire of the third wire cable 11 is provided with a spherical end stop 11b and penetrated through a slit of the retaining piece 12 so as to be movable relative to the retaining piece 12. Incidentally, any suitable compensator (not shown) for compensating a pulling force exerted on the wire of the third wire cable 11 and adjusting a total length of the wire of the third wire cable 11 is provided at a suitable portion of the wire of the third wire cable 11.

When the seat cushion is located at the first used position, the wire of the third wire cable 11 is in a condition shown in Fig. 9a. In this condition, when the person causes the tipping-up lock means to be unlocked by pulling the second operating lever 8 and then causes the seat cushion to be tipped up while allowing the stand leg portion 6 to be disengaged from the receiving base 6b (Fig. 1), the wire of the third wire cable 11 is pushed so as to overcome an action of the tension spring 10 (as shown in Fig. 9b) and allow the stand leg portion 6 to be pivoted toward a developed position thereof until the seat cushion reaches a position just before the tipped-up position. On the other hand, as the seat cushion is pivoted toward the tipped-up position from the position just before the tipped-up position, the action of the tension spring 10 (Fig. 8) is exerted on the wire of the third wire cable 11, whereby the wire of the third wire cable 11 is moved in such a manner that the wire end portion is moved relative to the retaining piece 12 so as to project from the retaining piece 12 as shown in Fig. 9c. Thus, the stand leg portion 6 is moved to the stored position by the action of the tension spring 10.

By the wire of the third wire cable 11, the stand leg portion 6 can be pivoted toward the stored position synchronously with the tipping-up movement of the seat cushion and diving-down movement of the entire vehicle seat, and can be pivoted toward the developed position synchronously with returning of the entire seat toward the used position of the entire vehicle seat or returning of the seat cushion toward the first used position.

In the tip-up/dive down type reclining vehicle seat of the first embodiment which is constructed as discussed above, in a condition where the entire vehicle seat is located at the used position thereof (see Fig. 1) and the reclining lock means and the tipping-up lock means are in the locked states (see Fig. 2), the lower end portion of the braking link 71 is stoppingly engaged with the stopper pin 51 provided on the side bracket 5' of the seat cushion 5 and the induction pin 72 of the braking link 71 is located at a rearward end of the guide hole 78 formed in the first link plate 73, whereby the used position of the entire vehicle seat is determined.

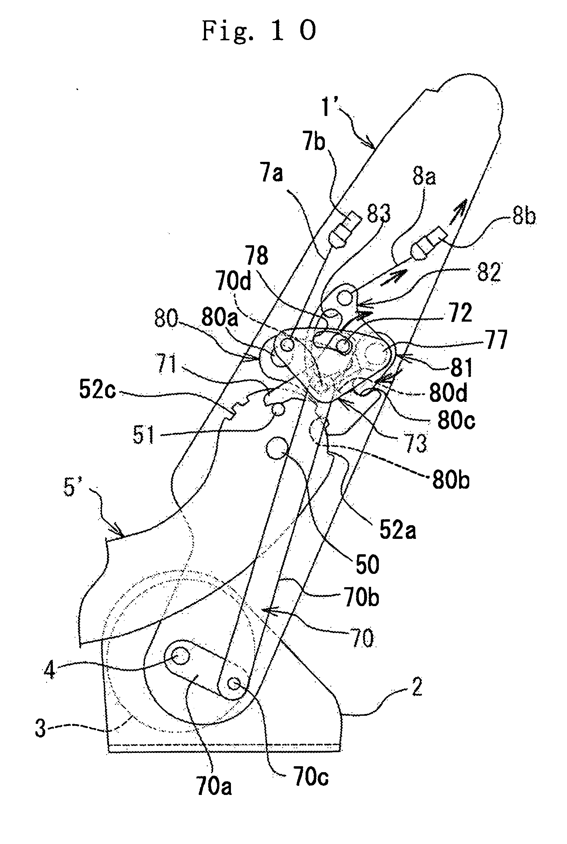

In a case where the seat cushion 1 is to be tipped up from the first used position in a condition where the entire vehicle seat is located at the used position thereof, when the second operating lever 8 is pull-operated by the person, an upward pulling force is applied to the second link plate 82 through the wire 8a of the second wire cable as shown in Fig. 10. By the upward pulling force, the second link plate 82 is upwardly swung about the support pin 77 and the cam member 81 is also swung together with the second link plate 82 in such a manner that the lower portion of the cam member 81 is disengaged from the engaging step portion 80c of the latch 80 and slips into the recess portion 80d of the latch 80.

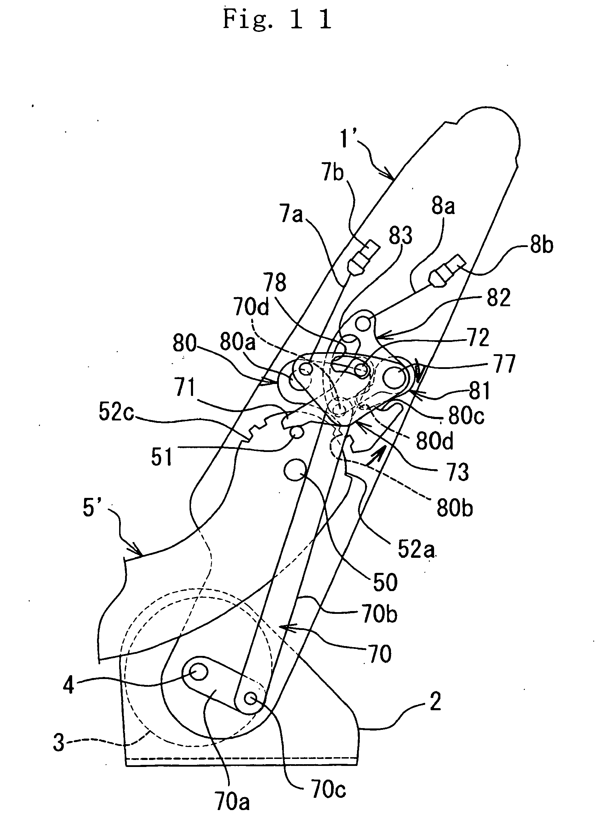

As the lower portion of the cam member 81 slips into the recess portion 80d of the latch 80, the latch 80 is swung up, whereby the projecting tooth 80b of the latch 80 is disengaged from the first cutout tooth 52a of the side bracket 5' of the seat cushion as shown in Fig. 11. The recess portion 80d of the latch 80 is configured to have the depth larger than the height of the engaged region between the projecting tooth 80b of the latch 80 and the cutout tooth 52a of the side bracket 5' of the seat cushion 5 as discussed above, so that as the lower portion of the cam 81 slips into the recess portion 80d, the latch 80 is considerably swung up, whereby the projecting tooth 80b can be positively disengaged from the first cutout tooth 52a of the side bracket 5' of the seat cushion. Thus, the tipping-up lock means is brought to the unlocked state, that is, the seat cushion is brought to a condition where it is allowed to be tipped up.

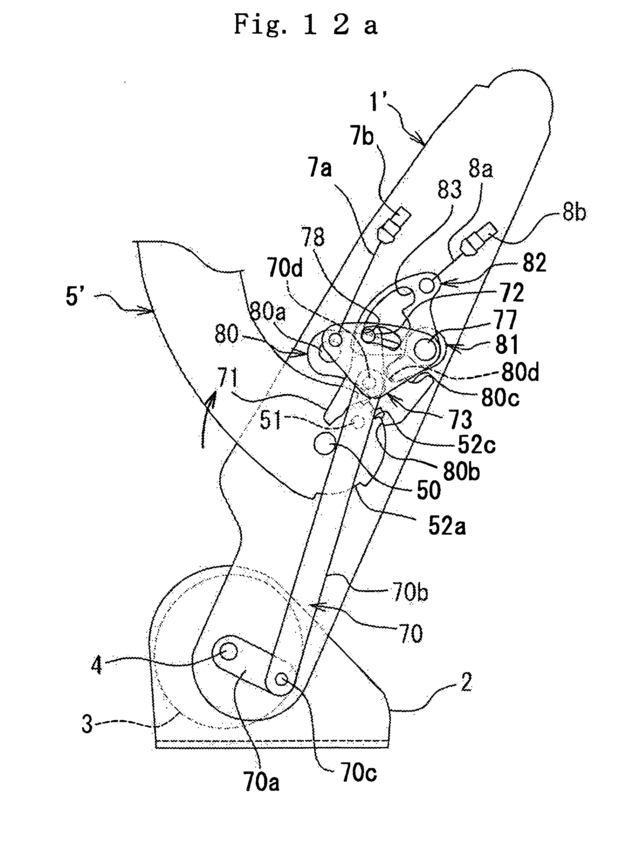

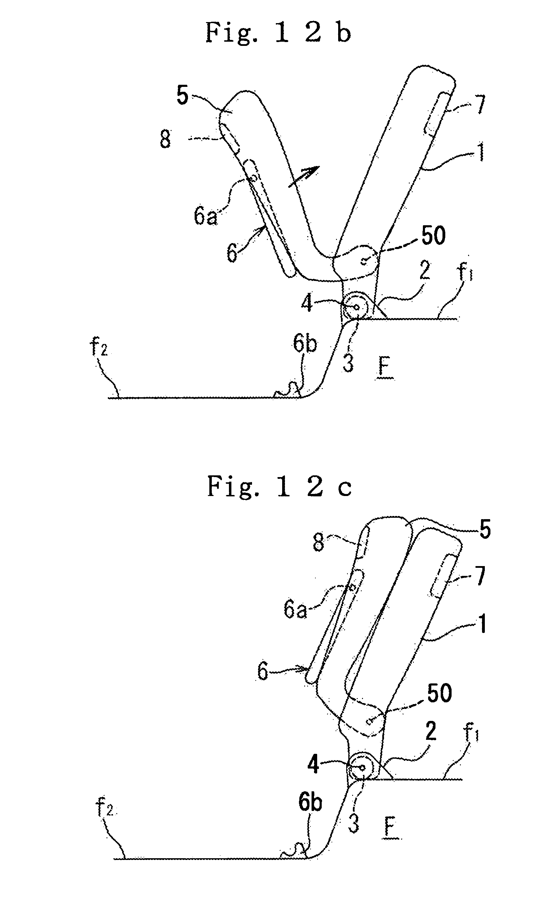

In the condition where the tipping-up lock means is unlocked, namely, the projecting tooth 80b of the latch 80 is disengaged from the cutout tooth 52a of the side bracket 5', when the person lifts the seat cushion up from the forward direction while leaving the second operating lever pulled and holding the seat cushion with his/her hand, the cutout tooth 52a of the side bracket 5' of the seat cushion is moved away from the first cutout tooth 80b of the latch 80 as shown in Fig. 12a. Thus, the seat cushion 5 is tipped up from the first used position to the tipped-up position around the support pins 50 as shown in Figs. 12b and 12c.

When the second operating lever 8 is pull-operated at the time of causing the tipping-up lock means to be unlocked, the second link plate 82 is swung upward and the induction pin 72 of the braking link 71 is escapingly moved toward the lower hole edge region 83b from the middle hole edge region 83a of the second link plate 82 (Fig. 7) relative to the second link plate 82 as shown in Fig. 12a, so that the induction pin 72 of the braking link 71 is not drawn up by the second link 82 and the reclining lock mechanisms are not unlocked.

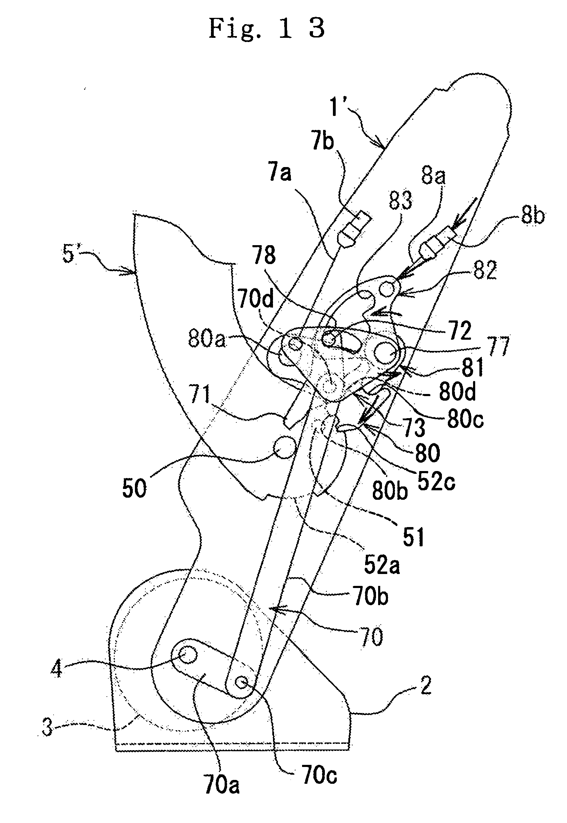

In the condition where the seat cushion is tipped-up as shown in Fig. 12c, when the second operating lever 8 is released from the pulled-state, the components which include the second link plate 82, the cam member 81 and the latch 80 come down by gravity while pulling the wire 8a of the second wire cable down as shown in Fig. 13 and are returned to their original positions. In the condition where the components are returned to the original positions, the lower portion of the cam member 81 is engagingly abutted against the engaging step portion 80c of the latch 80 and the projecting tooth 80b of the latch 80 is engaged with the second cutout tooth 52c of the side bracket 5' of the seat cushion 5. Thus, the seat cushion 5 is maintained in the tipped-up posture.

Returning of the seat cushion 5 maintained in the tipped-up posture to the first used position can be performed by pulling the second operating lever 8 in the same manner as discussed above. Namely, when the second operating lever 8 is pulled, the tipping-up lock means is unlocked. In this condition, the seat cushion can be pivoted to the first used position by the person.

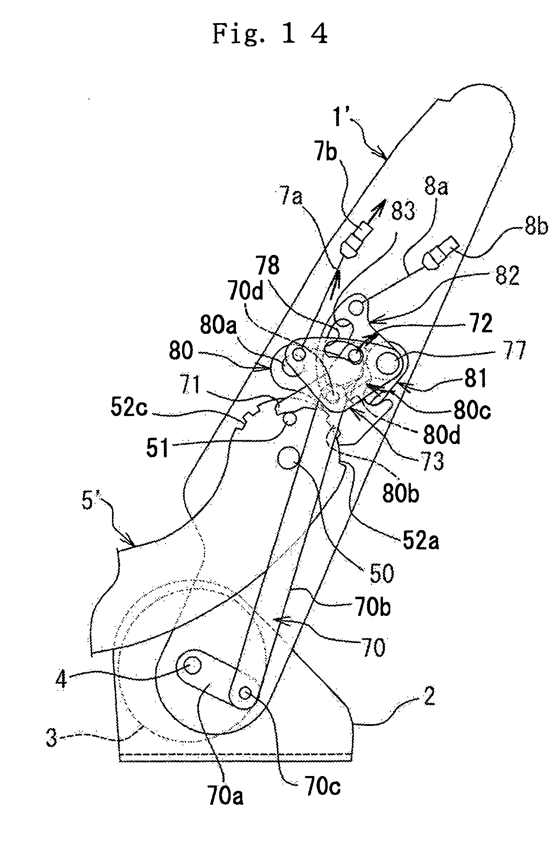

In a case where the reclining lock means is to be unlocked in the condition where the entire vehicle seat is located at the used position thereof and both the reclining lock means and the tipping-up lock means are locked (Fig. 1), when the person pulls the first operating lever 7, the wire 7a of the first wire cable of the first operating lever 7 is drawn up as shown in Fig. 14 and the first link plate 73 is swung upward around the support pin 77. At this time, the induction pin 72 of the braking link 71 is located at the rearward end of the guide hole 78 of the first link plate 73 and engagingly abutted against the middle hole edge portion 83a of the second link plate 82 (see Fig. 7), so that the second link plate 82 is also swung upward synchronously with the upward swinging of the first link plate 73.

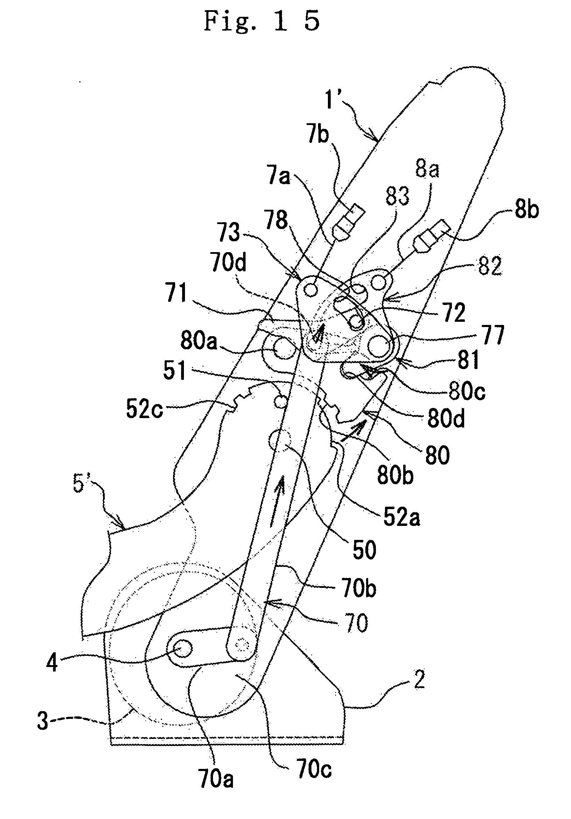

When the first link plate 73 is swung upward, the braking link 71 coupled via the induction pin 72 to the first link plate 73 is pulled up and the collapsible link bar member 70 coupled between the braking link 71 and the actuating shaft 4 of the first reclining lock mechanism 3 is pulled upward as shown in Fig. 15, whereby the actuating shafts of the first and second reclining lock mechanisms are synchronously rotated. Thereby, the reclining lock mechanisms are unlocked and the tipping-up lock means is also unlocked since the second link plate 82 is swung upward as discussed above.

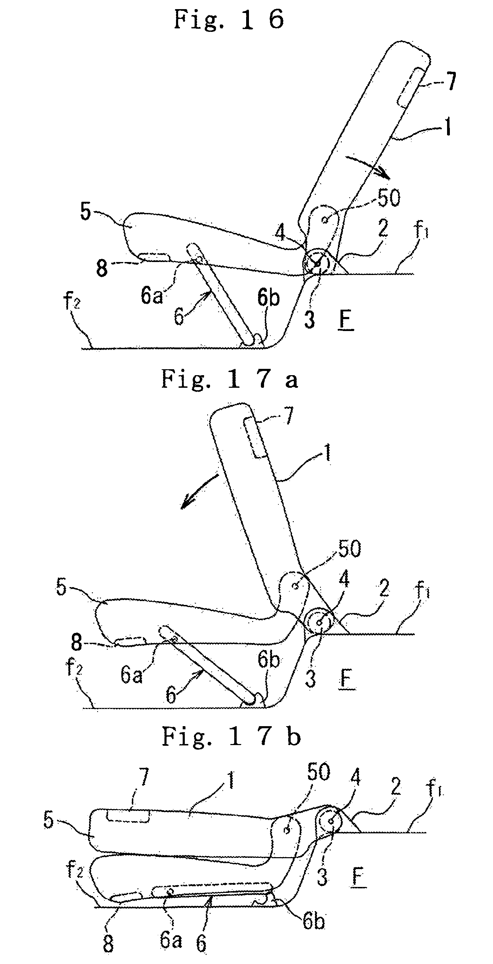

In the condition where the reclining lock means and the tipping-up lock means are unlocked, the person can cause the seat back 1 to be pivoted rearward so as to be angularly adjusted as shown in Fig. 16. When the first operating lever 7 is released from the pulled-state after the seat back 1 is angularly adjusted rearward, the components which include the first link plate 73, the braking link 71, the link bar member 70, the second link plate 82, the cam member 81 and the latch 80 come down by gravity and are returned to their original positions, whereby the reclining lock means and the tipping-up lock means are locked and the entire seat is maintained in a used position thereof at which the seat back is angularly adjusted rearward.

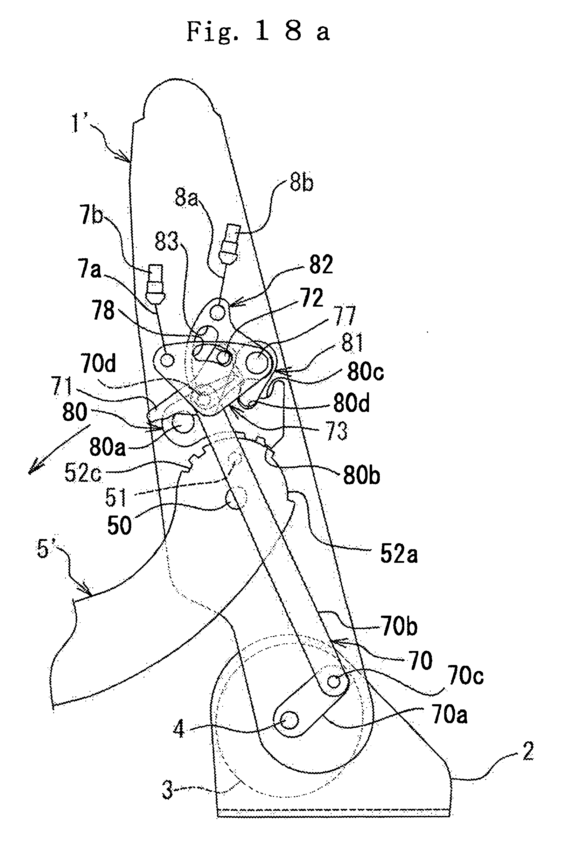

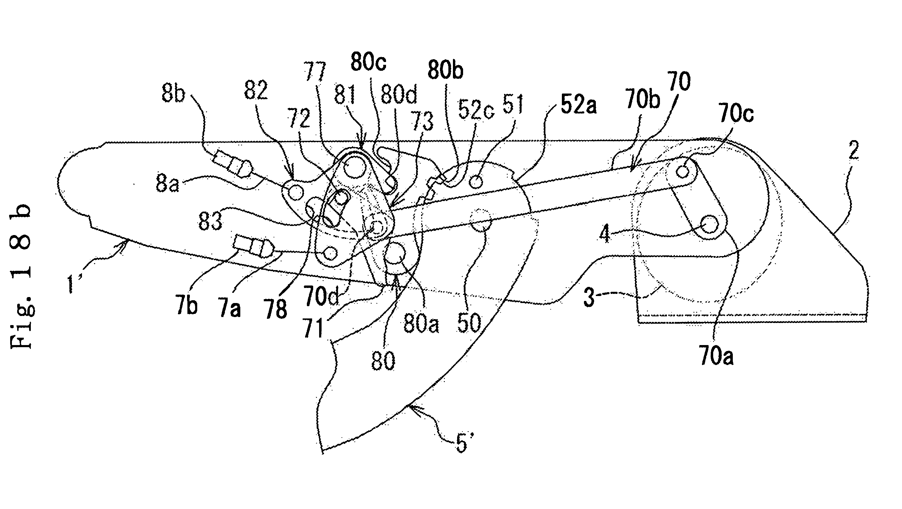

Moreover, in the condition where the reclining lock means and the tipping-up lock means are unlocked, the seat back is pivoted forward and the entire vehicle seat can be dived down and stored in a space on the lower step portion f₂ of the vehicle body floor F as shown in Figs. 17a and 17b. In this case, the components which include the first link plate 73, the braking plate 71, the link bar member 70, the second link plate 82, the cam member 81 and the latch 80 cannot come down by gravity as shown in Figs. 18a and 18b during the forward pivotal movement of the seat back from the substantially vertical position, so that the reclining lock means and the tipping-up lock means are maintained in the unlocked states.

In the condition in which the reclining lock means and the tipping-up lock means are maintained in the unlocked states, the person causes the entire seat to be forward pivoted to a certain extent while holding the seat back with his/her hand. Then, the person removes his/her hand from the recess portion of the seat back to the recess portion of the seat cushion and causes the seat cushion to be lifted down while holding the seat cushion with his/her hand. Thus, the entire vehicle seat can be dived down and stored in the space on the lower step portion f₂ of the vehicle body floor F.

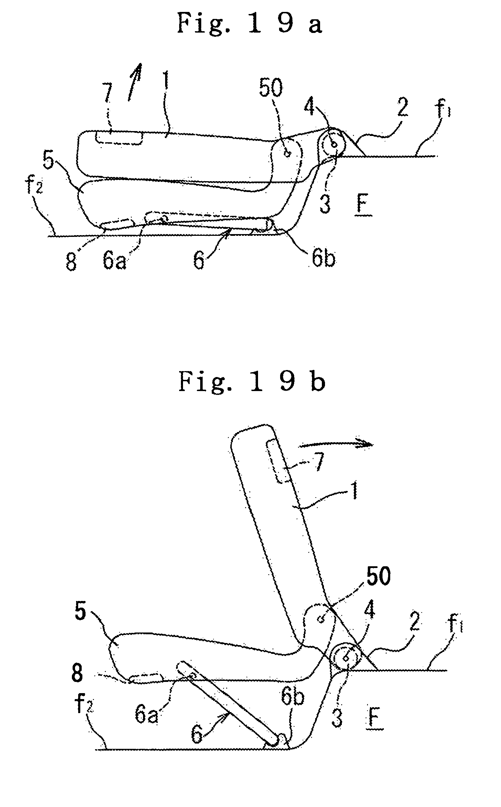

In the dived-down state of the entire vehicle seat, the reclining lock means and the tipping-up lock means are still maintained in the unlocked states, so that when the vehicle seat in the dived-down state is to be returned to the used position of the entire vehicle seat, the person inserts his/her hand into the recess portion of the seat back, and can easily lift the entire vehicle seat up from the dived-down position shown in Fig. 19a to a position shown in Fig. 19b and then return the vehicle seat to the used position of the entire vehicle seat (Fig. 1), while holding the seat back with his/her hand.

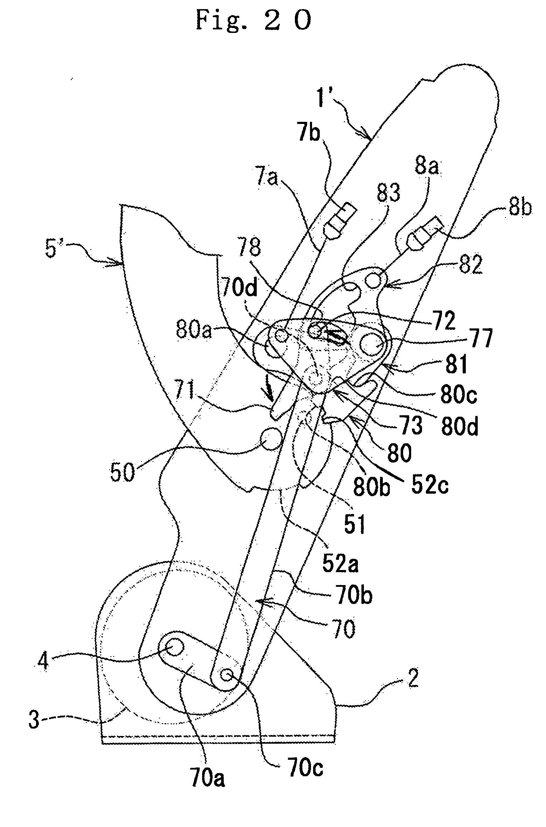

In the condition where the seat cushion is locked in the tipped-up position by the tipping-up lock means, the stopper pin 51 projecting from the side bracket 5' of the seat cushion 5 is separated from the lower portion of the braking link 71 and the braking link 71 comes down by gravity as shown in Fig. 20, so that the induction pin 72 of the braking link 71 is located at a forward end of the guide hole 78 formed in the first link plate 73.

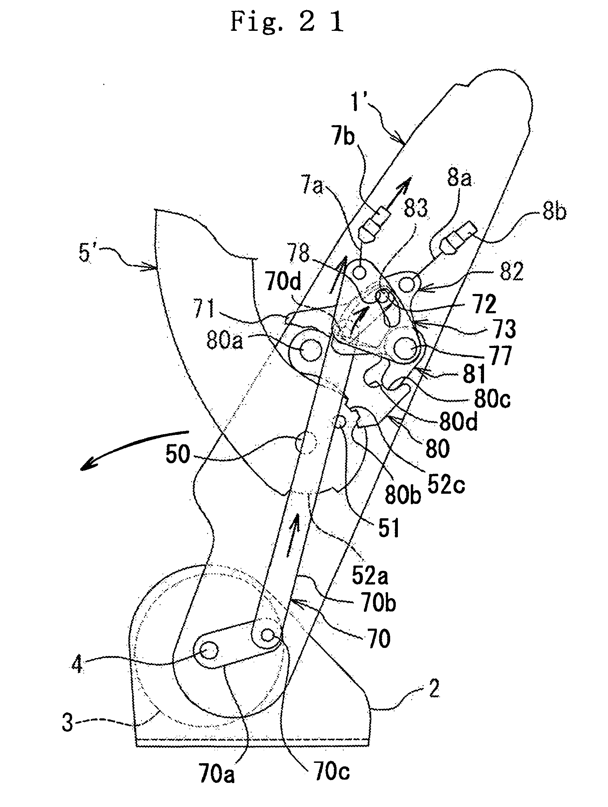

When the first operating lever 7 is pull-operated in order that the seat cushion 5 maintained in the tipped-up position is pivoted forward together with the seat back and then dived down, the first link plate 73 is swung upward as shown in Fig. 21, whereby the induction pin 72 of the braking link 71 which is located at the forward end of the guide hole 78 of the first link plate 73 is pulled upward, so that the reclining lock means is unlocked as discussed above.

Even if the reclining lock means is unlocked, the induction pin 72 of the braking link 71 is escapingly moved from the middle hole edge portion 83a of the second link plate 82 toward the upper hole edge portion 83c of the second link plate 82 (Fig. 7) with respect to the second link plate 82 according to the unlocking operation of the reclining lock means, so that the tipping-up lock means is maintained in the locked state.

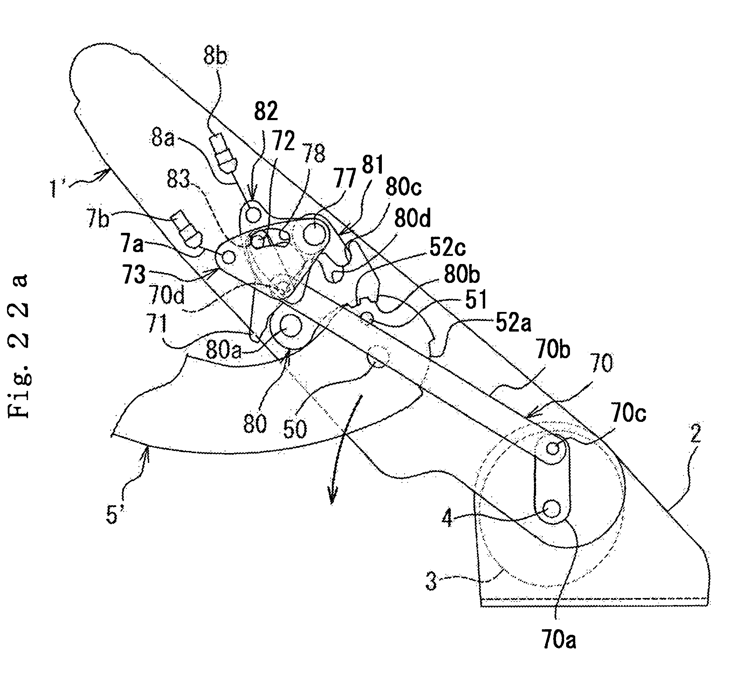

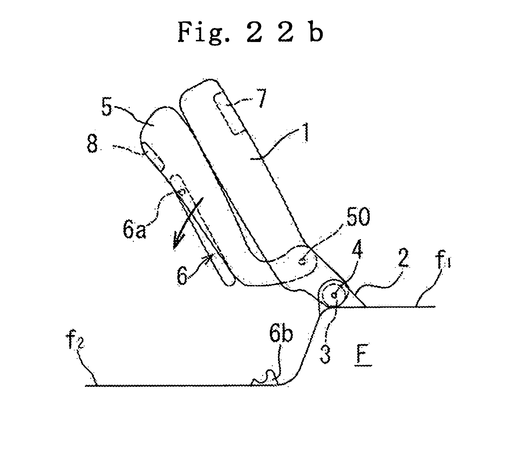

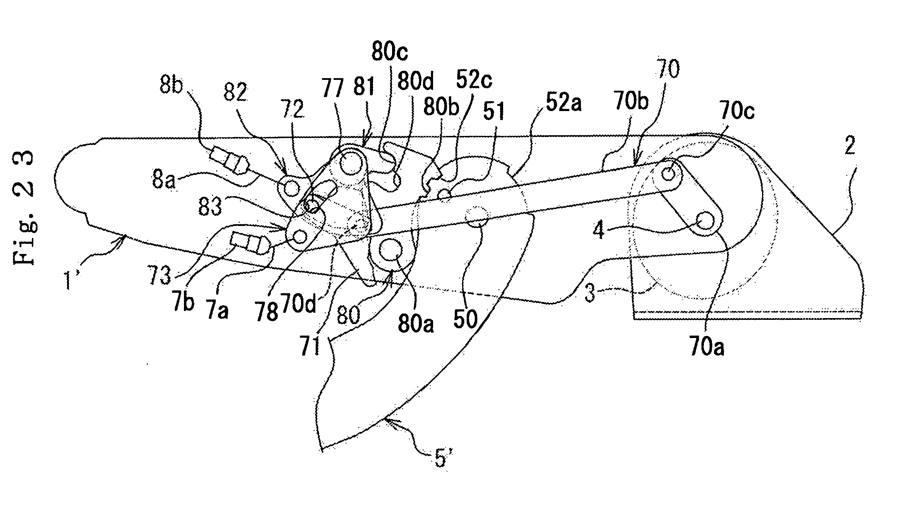

In the condition where the tipping-up lock means is maintained in the locked state, the seat cushion 5 is prevented from being pivoted with respect to the seat back 1 as shown in Figs. 22a and 22b, so that the seat cushion 5 can be forward pivoted together with the seat back 1 and the entire vehicle seat can be dived down as shown in Fig. 23 and then stored in the space on the lower step portion of the vehicle body floor.

The diving-down movement of the entire vehicle seat can be performed by the person in the same manner as discussed above. That is, the person inserts his/her hand into the recess portion of the seat back, causes the entire seat to be forward pivoted to the certain extent while holding the seat back with his/her hand. Then, the person removes his/her hand from the recess portion of the seat back to the recess portion of the seat cushion, and causes the seat cushion to be lifted down while holding the seat cushion with his/her hand. Thus, the entire vehicle seat can be dived down and stored in the space on the lower step portion f₂ of the vehicle body floor F.

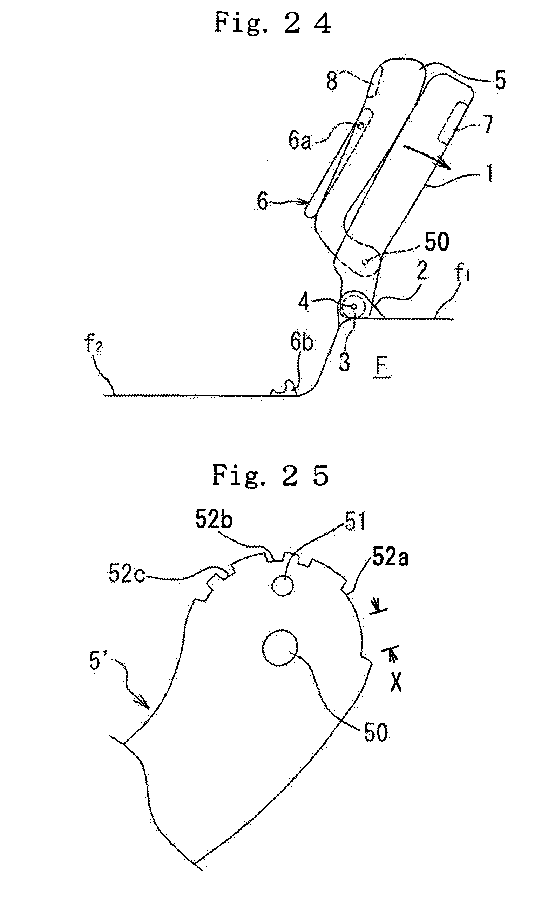

As discussed above, in the condition where the seat cushion 5 is tipped up, even if the reclining lock means is unlocked by operating the first operating lever 7, the tipping-up lock means is kept in the locked state, so that the entire vehicle seat can be angularly adjusted rearward as shown in Fig. 24.

During changing of the posture of the entire vehicle seat which has been discussed above, namely, during the tipping-up movement of the seat cushion 5 (Figs. 12b and 12c) or the diving-down movement of the entire vehicle seat (Figs. 17a and 17b), the stand leg portion 6 can be pivoted toward the stored position synchronously with such movement of the seat cushion or the entire vehicle seat. Moreover, during the returning movement of the entire vehicle seat to the used position thereof (Figs. 19a and 19b) or the returning movement of the seat cushion in the tipped-up state to the first used position, the stand leg portion 6 can be pivoted toward the developed position synchronously with such movement of the entire vehicle seat or the seat cushion.

Incidentally, while the case where the tipping-up lock means and the first and second releasing means are provided on the one side of the vehicle seat has been discussed with respect to the embodiment of the present invention, second tipping-up lock means, third releasing means and fourth releasing means which are constructed in the same manner as the first tipping-up lock means, the first releasing means and the second releasing means are done, respectively, except that the third and fourth releasing means do not include any operating levers, may be provided on the other of the both sides of the vehicle seat. In this case, a fourth wire cable is connected between the first operating lever 7 and a link plate of the third releasing means and a fifth wire cable is connected between the second operating lever 8 and a link plate of the fourth releasing means, so that when the first operating lever is pull-operated, the first releasing means and the third releasing means can be synchronously actuated and, when the second operating lever is pull-operated, the second releasing means and the fourth releasing means can be synchronously actuated.

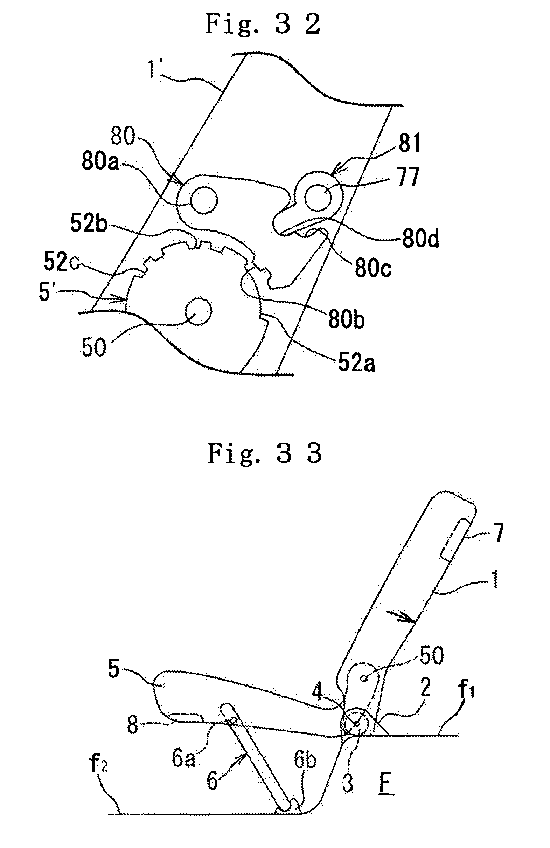

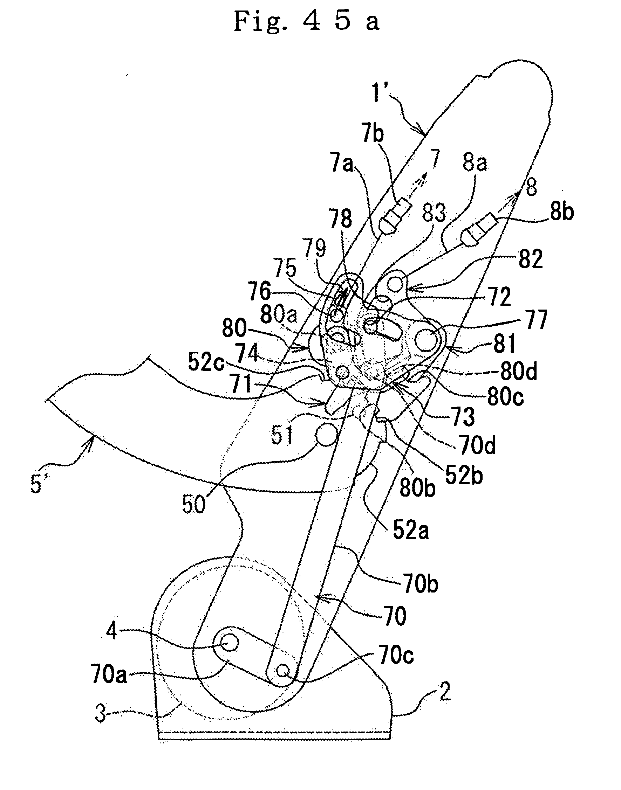

Referring to Figs. 25 to 45b, a tip-up/dive down type vehicle seat according to a second embodiment of the present invention will be discussed hereinafter. The second embodiment is constructed in a substantially same manner as the first embodiment is done, except for following points. In Figs. 25 to 45b, components that are substantially similar to those of the vehicle seat shown in Figs. 1 to 24 are designated by the same reference numerals. Like the vehicle seat according to the first embodiment of the present invention, the vehicle seat according to the second embodiment includes the seat back 1 (see Fig. 33) adapted to be pivotally movable and having the spaced apart side brackets serving as the side frame sections of the seat back frame for the seat back 1, the seat cushion 5 pivotally supported to the seat back 1 so as to be capable of being tipped up (see Fig. 33), the reclining lock means including the first and second reclining lock mechanisms 3 for releasably locking the seat back 1 and preventing the pivotal movement of the seat back 1 (only first reclining mechanism 3 is shown in Fig. 33), the first releasing means for unlocking the first and second reclining lock mechanisms 3 and allowing the seat back to be brought to the condition where the seat back is allowed to be pivoted forward and rearward (see Fig. 33), the tipping-up lock means for releasably locking the seat cushion 5 and preventing the tipping-up movement of the seat cushion (see Fig. 33), and the second releasing means for unlocking the tipping-up means and allowing the seat cushion to be brought to the condition where the seat cushion is allowed to be tipped up (see Fig. 33). The reclining lock mechanisms 3 are provided between the lower end portions of the spaced apart side brackets of the seat back 1 and the spaced apart base brackets 2 mounted on the upper step portion f₁ of the vehicle body floor F so as to stand up from the upper step portion f1, so that the seat back 1 is allowed to be releasably locked with respect to the upper step portion f1 of the vehicle body floor F by the reclining lock mechanisms 3.

Like the seat cushion of the first embodiment, the seat cushion 5 of the second embodiment includes the spaced apart side brackets serving as the side frame sections of the seat cushion frame for the seat cushion 5. The spaced apart side brackets of the seat cushion 5 are coupled at the rear end portions thereof to the portions of the side brackets of the seat back 1, which are adjacent the lower end portions of the spaced apart side brackets of the seat back 1, by the support pins 50, whereby the seat cushion 5 is pivotally supported to the seat back 1 so as to be allowed to be tipped up. Like the vehicle seat of the first embodiment, the vehicle seat of the second embodiment further includes the substantially U-shaped stand leg portion 6 in outline which is pivotally connected at the upper end regions of the spaced apart vertical portions thereof to the side brackets of the seat cushion 5 by the support pins 6a. As shown in Fig. 33, the receiving base 6b for receiving and engaging the lower horizontal portion of the stand leg portion 6 is mounted on the lower step portion f₂ of the vehicle body floor F. The stand leg portion 6 is adapted to be engaged at the lower horizontal portion thereof with the receiving base 6b so as to obliquely stand up from the lower step portion f₂ of the vehicle body floor F, whereby when the seat cushion is located at the first used position, the seat cushion is horizontally supported by the stand leg portion 6 which is releasably engaged with the receiving base 6b.

Like the reclining lock means of the first embodiment, the reclining lock means of the second embodiment is adapted to be unlocked by pull-operating the first operating lever 7 which is provided in the recess portion of the back of the seat back 1. In the condition where the reclining lock means is unlocked, the person can cause the seat back 1 to be pivoted forward or rearward in one motion while holding the seat back with his/her hand.

Like the tipping-up lock means of the first embodiment, the tipping-up lock means of the second embodiment is adapted to be unlocked by pull-operating the second operating lever 8 which is provided in the recess portion formed in the bottom region of the forward section of the seat cushion 5. In the condition where the tipping-up lock means is unlocked, the person can cause the seat cushion 5 to be tipped up in one motion while holding the seat cushion with his/her hand.

Like the side bracket 5' of the seat cushion 5 of the first embodiment, the side bracket 5' of the seat cushion 5 of the second embodiment is provided at the rear portion thereof with the substantially semicircular-arc shaped edge which extends about the support pin 50 of the side bracket 5' of the seat cushion. The stopper pin 51 is provided on the side bracket 5' so as to be arranged upward of the support pin 50 of the side bracket 5' of the seat cushion 5.

Referring to Fig. 25, the vehicle seat according to the second embodiment of the present invention is different from the vehicle seat of the first embodiment in that in addition to the first and second cutout teeth 52a, 52c, the tipping-up lock means includes a third cutout tooth 52b provided at the substantially semicircular-arc shaped edge of the side bracket 5' so as to be arranged between the first and second cutout teeth 52a, 52c and serving as means to facilitate causing of the seat cushion to be locked in a middle position between the first used position and the tipped-up position of the seat cushion. Like the first cutout tooth 52a of the first embodiment, the first cutout tooth 52a of the second embodiment is configured to include the recess portion which is adapted to receive the projecting tooth 80b of the latch 80 during the returning of the seat cushion to the first used position from the tipped-up position and has a length X sufficient to allow the seat back in the second used position to be angularly adjusted rearward in the condition where the seat cushion is located in the first used position.

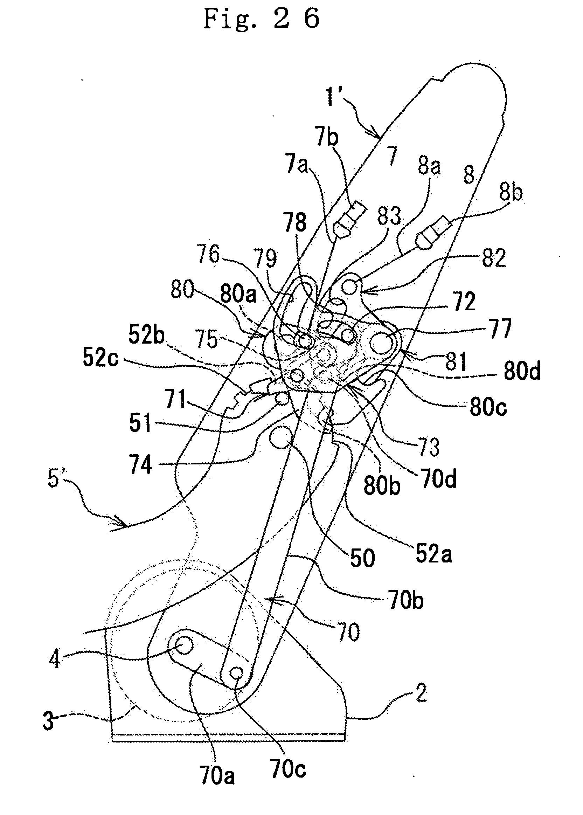

Referring to Figs. 26 to 28, the first releasing means of the second embodiment is different from the first releasing means of the first embodiment in that, in addition to the collapsible link bar member 70, the first braking link 71 coupled to the collapsible link bar member 70 and having the induction pin 72, the first link plate 73, and the first operating lever 7, the first releasing means of the second embodiment includes a second braking link 74 provided at the first link plate 73 and an elongated bar 75 collapsibly supported to an upper end portion of the second braking link 74 and having a wire retaining pin 76 projecting laterally from the elongated bar 75 at a free end thereof.

Like the collapsible link bar member 70 of the first embodiment, the collapsible link bar member 70 of the second embodiment includes the lower bar portion 70a coupled at the first end thereof to the actuating shaft 4 of the first reclining lock mechanism 3 and the upper bar portion 70b connected at the first end thereof to the second end of the lower bar portion 70a by the support pin 70c and extending upward.

Like the braking link 71 of the first embodiment which is shown in Fig. 4, the first braking link 71 of the second embodiment is swingably connected at the substantially middle portion thereof to the second end of the upper bar portion 70b by the support pin 70d.

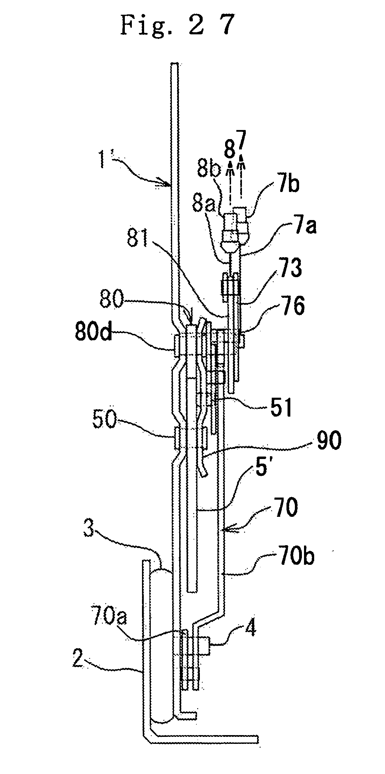

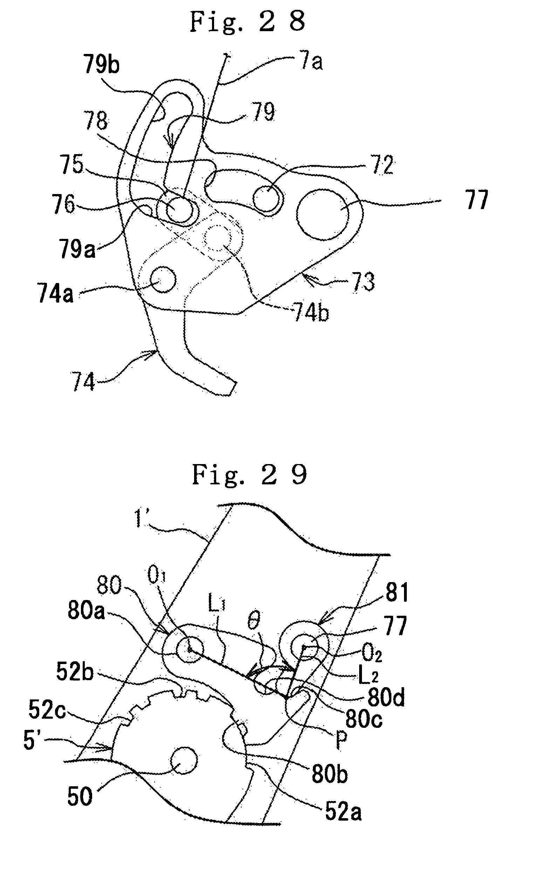

The first link plate 73 of the second embodiment is formed into a substantially triangular shape having three lobes as shown in Fig. 28, and swingably supported at a rearward lobe thereof to the side bracket 1' of the seat back 1 by the support pin 77 as shown in Figs. 26 and 27. Like the first link plate 73 of the first embodiment, the first link plate 73 of the second embodiment has the circular arc-shaped guide hole 78 formed therein so as to extend about the support pin 70d of the first braking link 71. The induction pin 72 of the first braking link 71 is inserted through the guide hole 78 of the first link plate 73. The first link plate 73 of the second embodiment is different from the first link plate 73 of the first embodiment in that it has a substantially L-shaped control hole 79 formed therein. The control hole 79 includes a horizontal engaging hole portion 79a located at a position lower than the forward end of the guide hole 78, and a vertical hole portion 79b vertically extending so as to continue from the horizontal engaging hole portion 79a. The wire retaining pin 76 of the elongated bar 75 is inserted through the control hole 79 of the first link plate 73.

The second braking link 74 is mounted at a middle portion thereof to the first link plate 73 by a support pin 74a in such a manner that a lower portion of the second braking link 74 is adapted to be abutted against the stopper pin 51 from the direction opposite to the direction from which the lower portion of the first braking link 71 is abutted against the stopper pin 51. The elongated bar 75 is connected to the upper end portion of the second braking link 74 by a support pin 74b. The vehicle seat of the second embodiment is further different from the vehicle seat of the first embodiment in that the wire 7a of the first wire cable of the first operating lever 7 is connected to the wire retaining pin 76 projecting laterally from the upper end of the elongated bar 75.

In the vehicle seat of the second embodiment, when the first operating lever 7 is pull-operated, the wire retaining pin 76 of the elongated bar 75 which is engaged with the horizontal engaging hole portion 79a of the control hole 79 is drawn upward and the first link plate 73, the first braking link 71, and the link bar member 70 are drawn up, whereby the actuating shafts 4 of the first and second reclining mechanisms are synchronously rotated and the reclining lock means is brought to the unlocked state. Moreover, when the first operating lever 7 is released from the pulled-state, the components including the first link plate 73, the first braking link 71 and the link bar member 70 come down by gravity, whereby the actuating shafts 4 of the reclining mechanisms are rotated back and the reclining lock means is brought to the locked state.

As shown in Figs. 26 and 27, the tipping-up lock means of the second embodiment includes the first, second and third cutout teeth 52a, 52c, 52b provided at the substantially semicircular arc-shaped edge of the side bracket 5', the latch 80 swingably supported at the forward portion thereof to the side bracket 1' of the seat back by the support pin 80a, and the cam member 81 supported to the support pin 77 of the first link plate 73.

Like the latch 80 of the first embodiment which is shown in Fig. 5, the latch 80 of the second embodiment is provided at the lower edge region of the rearward portion thereof with the projecting tooth 80b as shown in Fig. 29. The projecting tooth 80b is adapted to be selectively and releasably engaged with the first, second and third cutout teeth 52a, 52c, 52b of the side bracket 5' of the seat cushion 5. In order that the projecting tooth 80b of the latch 80 can be securely engaged with the second and third teeth 52c, 52b, the projecting tooth 80b is configured to include the two spaced apart projecting tooth-portions.

As shown in Figs. 26 and 27, the cam member 81 is swingably supported at the cam body thereof to the side bracket 1' of the seat back 1 by the support pin 77 of the first link plate 73 with the lower portion thereof being directed to the upper region of the rearward portion of the latch 80.

Like the latch 80 of the first embodiment, the latch 80 of the second embodiment has the engaging step portion 80c formed in the upper region of the rearward portion thereof. The lower portion of the cam member 81 is releasably abutted against the engaging step portion 80c of the latch 80, whereby the cam member 81 functions as the prop with respect to the latch 80, so that the engagement between the projecting tooth 80b of the latch 80 and each of the cutout teeth 52a, 52b, 52c of the side bracket 5' of the seat cushion 5 can be positively maintained.

Like the cam member 81 of the first embodiment, the angle of the cam member 81 relative to the latch 80 is set in such a manner that the angle θ between the reference line L₁ connecting the axial center O₁ of the support pin 80a of the latch 80 and the abutment point P of the cam member 81 against the engaging step portion 80c of the latch 80, and the line L₂ connecting the axial center O₂ of the support pin 77 of the cam member 81 and the abutment point P is kept to be an acute angle, as shown in Fig. 29.

Like the cam member 81 of the first embodiment, the lower portion of the cam member 81 of the second embodiment is formed into the substantially semielliptical shape. Correspondingly to such a shape of the lower portion of the cam member 81, the bottom surface of the engaging step portion 80c of the latch 80 is formed so as to have the substantially J-shape which allows the lower portion of the cam member 81 to be easily abutted against the engaging step portion 80c. Moreover, the substantially J-shaped bottom surface of the engaging step portion 80c is formed so as to have a curve which allows at least half or more region of the lower longitudinal portion of the cam member 81 to be received by the engaging step portion 80c, so that the lower longitudinal portion of the cam member 81 can be positively abutted against the engaging step portion 80c of the latch 80 and stably received by the engaging step portion 80c.

Like the second releasing means of the first embodiment, the second releasing means of the second embodiment includes the recess portion 80d formed in the upper region of the rearward portion of the latch 80 for allowing the swinging movement of the cam member 81, the second link plate 82 supported to the side bracket 1' of the seat back 1 by the support pin 77 of the first link plate 73, and the second operating lever 8. The second operating lever 8 is coupled to the second link plate 82 via the wire 8a of the second wire cable that is inserted through the tube 8b of the second wire cable.

The recess portion 80d of the latch 80 extends continuously from the edge of the engaging step portion 80c and is formed so as to have the depth which is not less than the height of the engaged region between the projecting tooth 80b of the latch 80 and each of the cutout teeth 52a, 52b, 52c and allows the projecting tooth 80b of the latch 80 to be escapingly disengaged from each of the cutout teeth 52a, 52b, 52c. In the illustrated example, the recess portion 80d of the latch 80 is formed so as to have the substantially U-shape which has the depth larger than the height of the engaged region between the projecting tooth 80d and each of the cutout teeth 52a, 52b, 52c and fits the lower portion of the cam member 81.

The recess portion 80d of the latch 80 serves to allow the cam member 81 to be swung up in such a manner that the lower portion of the cam member 81 is disengaged from the engaging step portion 80c of the latch 80 and slips into the recess portion 80d. As the cam member 81 is swung up, the latch 80 is swung up in such a manner that the projecting tooth 80b is positively disengaged from any one of the cutout teeth 52a, 52b, 52c of the side bracket 5' of the seat cushion. Incidentally, like the latch of the first embodiment, the latch 80 of the second embodiment is held so as to be stably swingable with respect to the holding plate 90 (Fig. 27) which is supported by the support pin 50 of the side bracket 5' and the support pin 80a of the latch 80.

As discussed above, the first link plate 73, the second link plate 82 and the cam member 81 are supported to the support pin 77 which is rotatably supported to the side bracket 1' of the seat back 1. The cam member 81 and the second link plate 82 are fixed to the support pin 77, so that they are swingable together.

Like the second link plate 82 of the first embodiment which is shown in Fig. 7, the second link plate 82 of the second embodiment is formed with the opening hole 83 which receives the induction pin 72 of the first braking link 71 and has the middle hole edge region 83a against which the induction pin 72 of the first braking link 71 is adapted to be engagingly abutted when the entire vehicle seat is located at the used position of the entire vehicle seat, the lower hole edge region 83b toward which the induction pin 72 of the first braking link 71 is adapted to be escapingly moved from the middle hole edge region 83a when the seat cushion is tipped up, and the upper hole edge region 83c toward which the induction pin 72 is adapted to be escapingly moved when the seat cushion is in the tipped-up condition and the reclining lock means is unlocked.

When the second operating lever 8 is pull-operated by the person, the second link plate 82 and the cam member 81 are swung upward together and the latch 80 is swung upward by the upward movement of the cam member 81, whereby the tipping-up lock means is unlocked. Moreover, when the second operating lever 8 is released from the pulled-state, the entire components which include the second link plate 82, the cam member 81 and the latch 80 come down by gravity, whereby the tipping-up lock means is brought to the locked state.

Like the stand leg portion 6 of the first embodiment which is shown in Fig. 8, the stand leg portion 6 of the second embodiment is typically urged toward the stored position under the seat cushion by the tension spring 10 which is retained at the one end thereof to the upper end region of the one of the spaced apart vertical portions of the U-shaped stand leg portion 6 and retained at the other end thereof to the one of the side brackets of the seat cushion. Moreover, the wire 11a of the third wire cable 11 which is inserted through the tube 11 c of the third wire cable 11 is coupled at the one end portion thereof to the upper end region of the vertical portion of the stand leg portion 6 and coupled at the other end portion thereof to the seat back.

Like the third wire cable 11 of the first embodiment which is shown in Figs. 9a to 9c, the other end portion of the wire of the third wire cable 11 of the second embodiment is supported to the retaining piece 12 which is provided at the suitable portion of the seat back frame. The other end portion of the wire of the third wire cable 11 is provided with the spherical end stop 11b and penetrated through the slit of the retaining piece 12 so as to be movable relative to the retaining piece 12. Like the first embodiment, any suitable compensator for compensating the pulling force exerted on the wire of the third wire cable 11 and adjusting the total length of the wire of the third wire cable 11 is provided at the suitable portion of the wire of the third wire cable 11.

When the seat cushion is located at the first used position, the wire of the third wire cable 11 is in the condition shown in Fig. 9a. In this condition, when the person causes the tipped-up lock means to be unlocked by pulling the second operating lever 8 and then causes the seat cushion to be tipped up while allowing the stand leg portion 6 to be disengaged from the receiving base 6b (Fig. 33), the wire of the third wire cable 11 is pushed so as to overcome the action of the tension spring 10 (as shown in Fig. 9b) and allow the stand leg portion 6 to be pivoted toward the developed position thereof until the seat cushion reaches a position just before the tipped-up position. On the other hand, as the seat cushion is pivoted toward the tipped-up position from the position just before the tipped-up position, the action of the tension spring (Fig. 8) is exerted on the wire of the third wire cable 11, whereby the wire of the third wire cable 11 is moved in such a manner that the wire end portion is moved relative to the retaining piece 12 so as to project from the retaining piece as shown in Fig. 9c Thus, the stand leg portion 6 is moved to the stored position by the action of the tension spring 10.

By the wire of the third wire cable 11, the stand leg portion 6 can be pivoted toward the stored position synchronously with the tipping-up movement of the seat cushion and the diving-down movement of the entire vehicle seat, and can be pivoted toward the developed position synchronously with returning of the entire seat toward the used position of the entire vehicle seat or returning of the seat cushion to the first used position.

In the tip-up/dive down type reclining vehicle-seat of the second embodiment which is constructed as discussed above, in a condition where the entire seat is located at the used position thereof (Fig. 1) and the reclining lock means and the tipping-up lock means are in the locked states (Fig. 26), the lower end portion of the first braking link 71 is stoppingly engaged with the stopper pin 51 provided on the side bracket 5' of the seat cushion 5, so that the induction pin 72 of the first braking link 71 is located at the rear end portion of the guide hole 78 of the first link plate 73, whereby the used position of the entire vehicle seat is determined.

In the condition where the entire seat is located at the used position thereof, the second braking link 74 is hanged down from the first link plate 73 by gravity and assumes a posture in which a lower portion of the second braking link 74 is located close to the stopper pin 51 but is not contacted with the stopper pin 51. Therefore, the elongated bar 75 is in a condition where it becomes collapsed relative to the second braking link 74, and the wire retaining pin 76 is located in the engaging hole portion 79a of the control hole 79 formed in the first link plate 73.

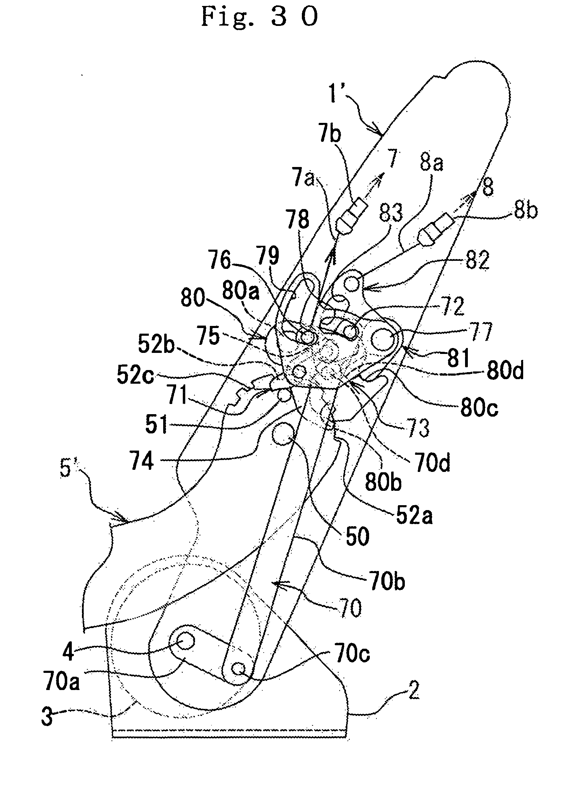

In the condition where the entire seat is located at the used position thereof, when the person pulls the first operating lever 7 in order to cause the reclining lock means to be unlocked, the wire 7a of the first wire cable is pulled up so as to drawn up the wire retaining pin 76 located at the horizontal engaging hole portion 79a of the control hole 79 as shown in Fig. 30, whereby the first link plate 73 is swung up about the support pin 77. Moreover, the induction pin 72 of the first braking link 71 is located at the rearward end of the guide hole 78 of the first link plate 73 and engaged with the middle hole edge 83a of the opening hole 83 formed in the second link plate 82, so that the second link plate 82 is also pulled up by the drawing-up of the wire retaining pin 76.

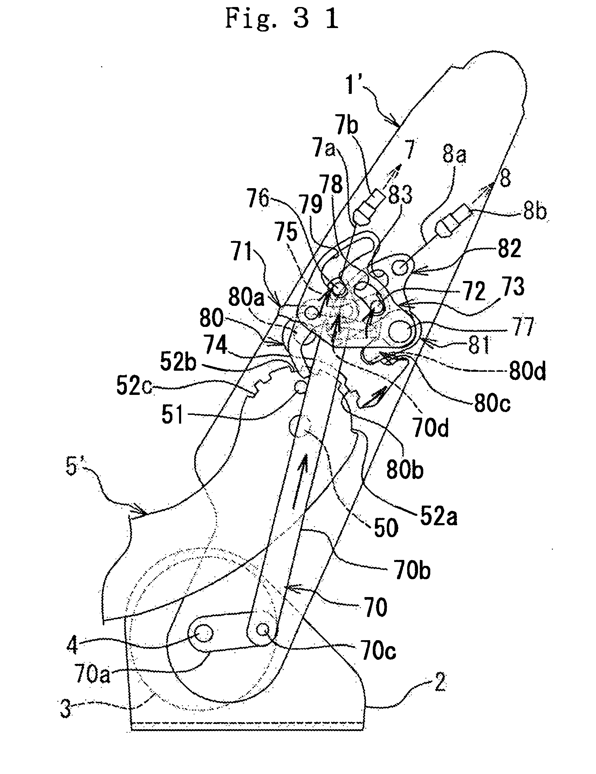

When the first link plate 73 is swung up about the support pin 77, the induction pin 72 is drawn up and the first braking link 71 coupled via the induction pin 72 to the first link plate 73 is pulled upwardly, to thereby cause the collapsible link bar member 70 to be pulled upwardly as shown in Fig. 31. Thus, the reclining lock means is brought to the unlocked state.

Moreover, when the first link plate 73 is swung upward, the second link plate 82 is also swung upward as discussed above, whereby the cam member 81 is swung upward in such a manner that the lower portion of the cam member 81 is disengaged from the engaging step portion 80c of the latch 80 and slips into the recess portion 80d of the latch 80. As the lower portion of the cam member 81 slips into the recess portion 80d of the latch 80, the latch 80 is swung up in such a manner that the projecting tooth 80b is disengaged from the first cutout tooth 52a of the side bracket 5', whereby the tipping-up lock means is also unlocked.

The recess portion 80d of the latch 80 is configured to have the depth larger than the height of the engaged region between the projecting tooth 80b of the latch 80 and the cutout tooth 52a of the side bracket 5' as discussed above, so that as the lower portion of the cam member 81 slips into the recess portion 80d, the latch is considerably swung up, whereby the projecting tooth 80b can be positively disengaged from the first cutout tooth 52a of the side bracket 5'.

In the condition where the reclining lock means and the tipping-up lock means are unlocked, the seat back can be angularly adjusted rearward by an extent corresponding to the length X of the recess portion of the first cutout tooth 52a (Fig. 25), as shown in Fig. 33. When the first operating lever 7 is released from the pulled-state after the seat back is angularly adjusted rearward, the components which include the first link plate 73, the first braking link 71, the link bar member 70, the second link plate 82, the cam member 81, and the latch 80 come down by gravity, whereby the reclining lock means and the tipping-up lock means are locked. Thus, the entire vehicle seat is maintained in the used position thereof.

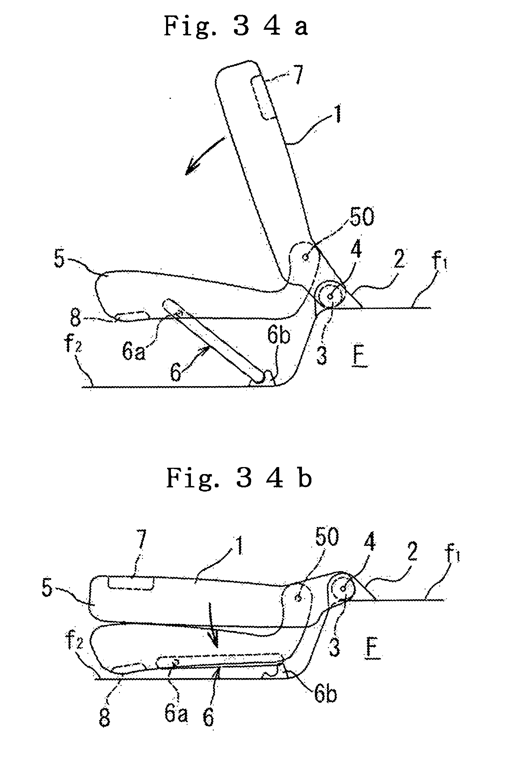

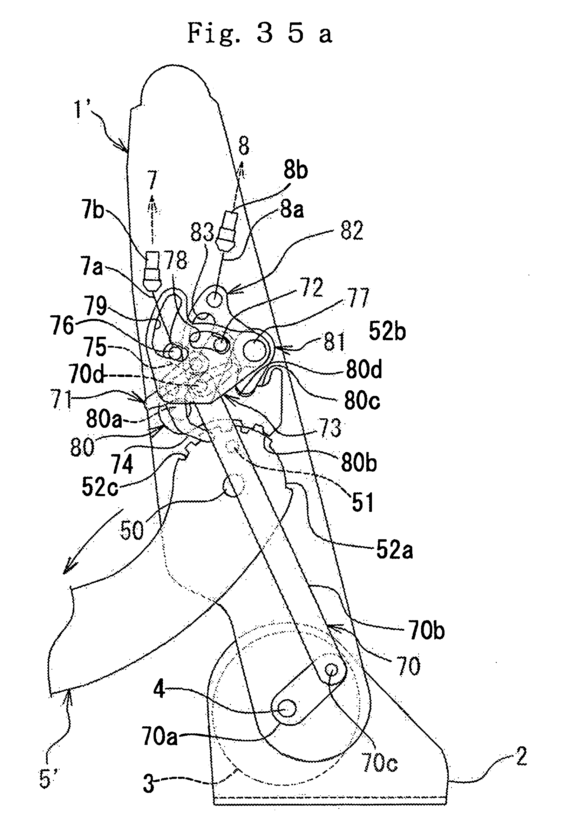

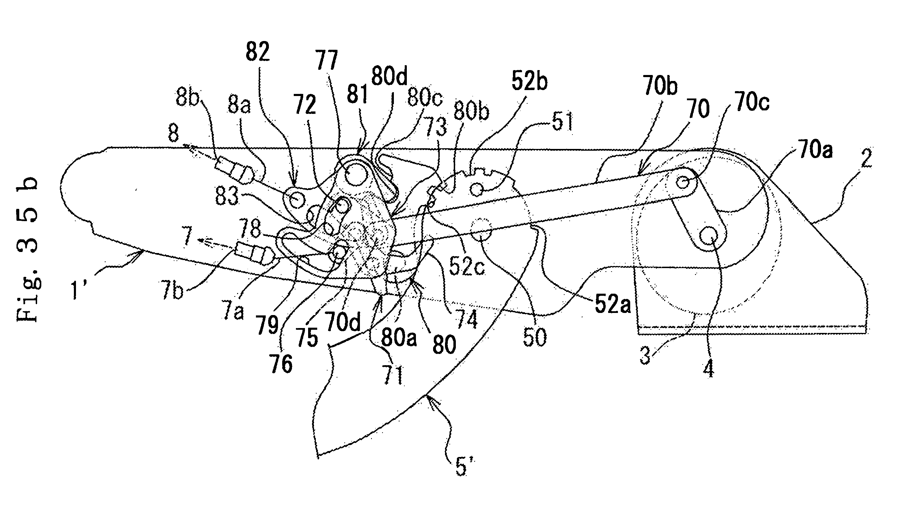

In the condition where the reclining lock means and the tipping-up lock means are unlocked, the seat back 1 is pivoted forward and the entire vehicle seat can be dived down and stored in the space on the lower step portion f₂ of the vehicle body floor F, as shown in Figs. 34a and 34b. In this case, the components which include the first link plate 73, the first braking plate 71, the link bar member 70, the second link plate 82, the cam member 81 and the latch 80 cannot come down by gravity as shown in Figs. 35a and 35b during the forward pivotal movement of the seat back from the substantially vertical position, so that the reclining lock means and the tipping-up lock means are maintained in the unlocked states.

In the condition which the reclining lock means and the tipping-up lock means are maintained in the unlocked states, the person causes the entire seat to be forward pivoted to a certain extent while holding the seat back with his/her hand. Then, the person removes his/her hand from the recess portion of the seat back to the recess portion of the seat cushion and causes the seat cushion to be lifted down while holding the seat cushion with his/her hand. Thus, the entire vehicle seat can be dived down and stored in the space on the lower step portion f₂ of the vehicle body floor F.

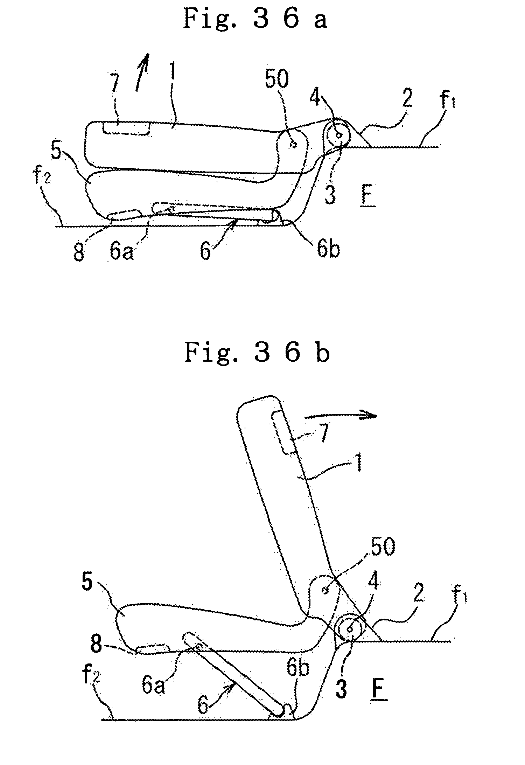

In the dived-down state of the entire vehicle seat, the reclining lock means and the tipping-up lock means are still maintained in the unlocked states, so that when the vehicle seat in the dived-down sate is to be returned to the used position of the entire vehicle seat, the person inserts his/her hand into the recess portion of the seat back, and can easily lift the entire vehicle seat up from the dived-down position shown in Fig. 36a to a position shown in Fig. 36b and then return the vehicle seat to the used position of the entire vehicle seat (Fig. 1), while holding the seat back with his/her hand.

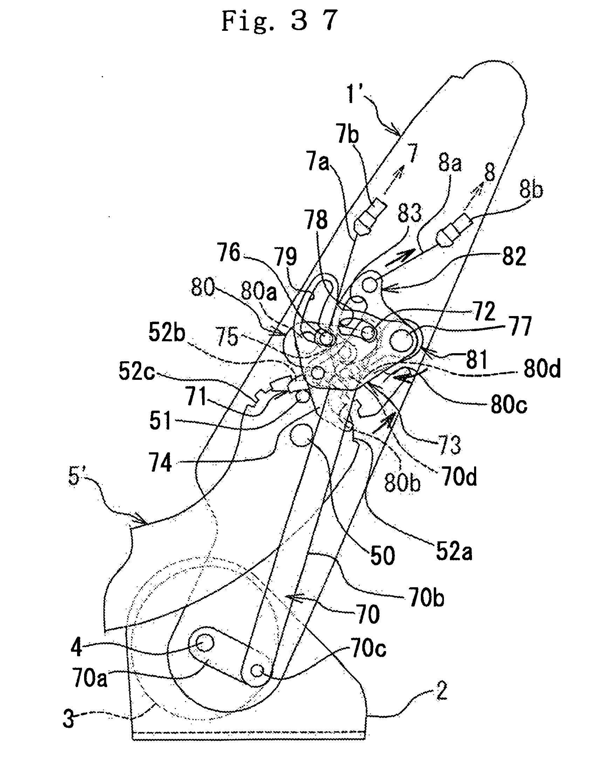

In a case where the seat cushion is to be tipped up in the condition where the entire vehicle seat is located at the used position thereof, when the second operating lever is pull-operated as shown in Fig. 37, as discussed above, the second link plate 82 is swung up about the support pin 77 and the cam member 81 is also swung up together with the second link plate 81 in such a manner that the lower portion of the cam member 81 is disengaged from the engaging step portion of the latch 80 and slips into the recess portion 80d of the latch 80, whereby the latch 80 is swung up in such a manner that the projecting tooth 80b of the latch 80 is disengaged from the cutout tooth 52a of the side bracket 5'. Thus, the tipping-up lock means is brought to the unlocked-state (Fig. 32).

When the tipping-up lock means is unlocked, the induction pin 72 is escapingly moved toward the lower hole edge region 83b of the opening hole 83 relative to the second link plate 82. Therefore, the induction pin 72 is not drawn up by the second link plate 82, so that the reclining lock means is not unlocked.

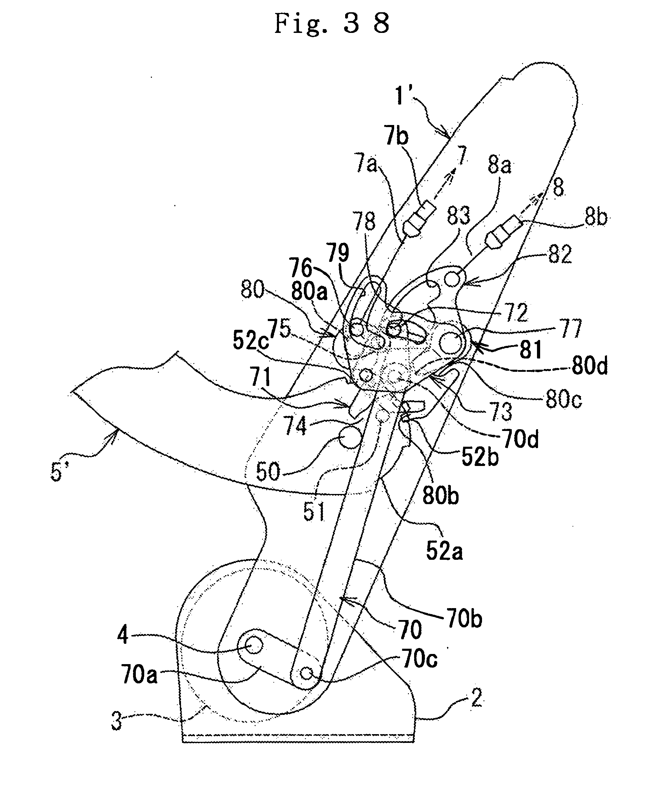

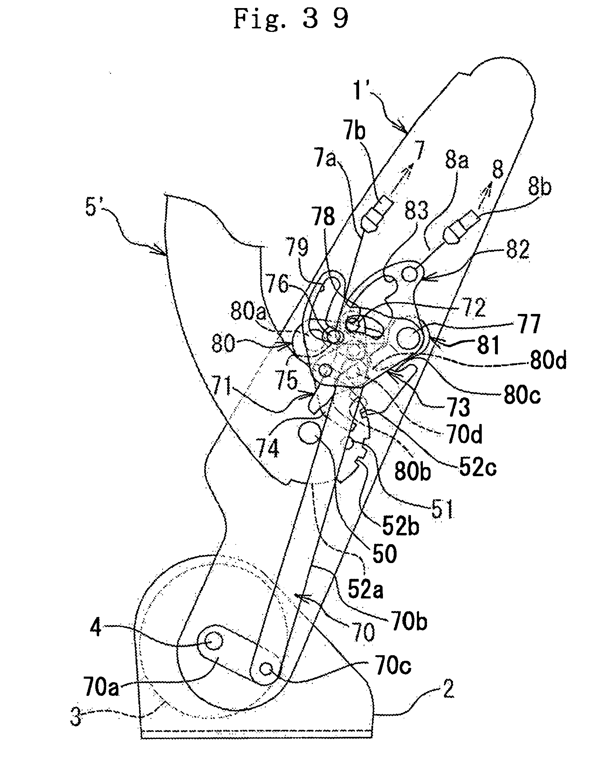

In the condition where the tippling-up lock means is unlocked, namely, the projecting tooth 80b of the latch 80 is disengaged from the cutout tooth 52a of the side bracket 5', when the person lifts the seat cushion up from the forward direction while leaving the second operating lever pulled and holding the seat cushion with his/her hand, the cutout tooth 52a of the side bracket 5' of the seat cushion is moved away from the first projecting tooth 80b of the latch 80. Thus, the seat cushion 5 is tipped up from the first used position to a middle position between the first used position and the tipped-up position (see Fig. 38) or tipped up from the first used position to the tipped-up position (see Fig. 39).

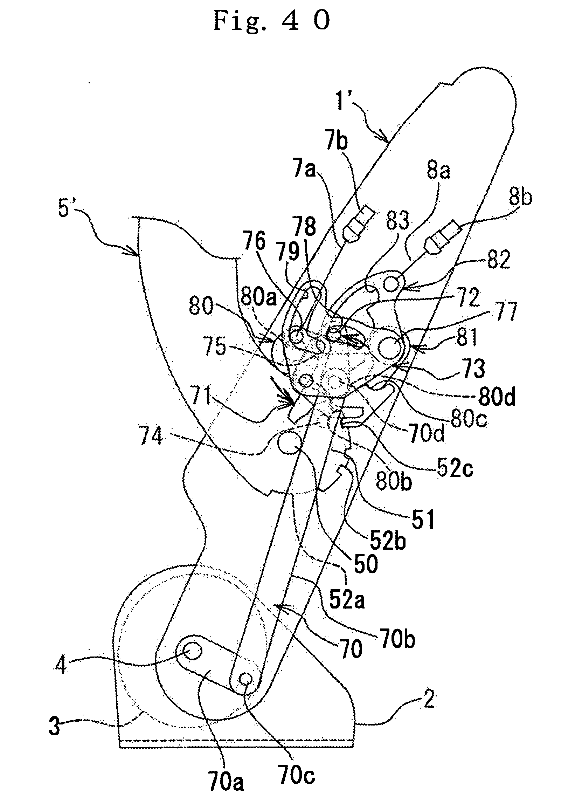

In the condition where the seat cushion is tipped up to the tipped-up position for example, when the second operating lever is released from the pulled-state, the components including the second link plate 82, the cam member 81, and the latch 80 come down by gravity as shown in Fig. 40. At this time, the lower portion of the cam member 81 is engagingly abutted against the engaging step portion 80c of the latch 80 and the projecting tooth 80b of the latch 80 is engaged with the second cutout tooth 52c, whereby the seat cushion is maintained in the tipped-up condition.

In a case where the seat cushion 5 is to be returned to the first used position from the tipped-up position or the middle position, when the second operating lever is pull-operated, the tipping-up lock means is unlocked. In this condition, the seat cushion can be returned to the first used position.

When the seat cushion is locked in the tipped-up position (Fig. 40), the stopper pin 51 of the side bracket 5' is separated from the lower portion of the first and second braking links 71, 74 and the first and second braking links 71, 74 come down by gravity. Thereby, the induction pin 72 of the first braking link 71 is moved to the forward end of the guide hole 78 formed in the first link plate 73. On the other hand, the wire retaining pin 76 provided at the elongated bar 75 which is connected to the second braking link 74 is moved toward the horizontal engaging hole portion 79a of the control hole 79 formed in the first link plate 73.

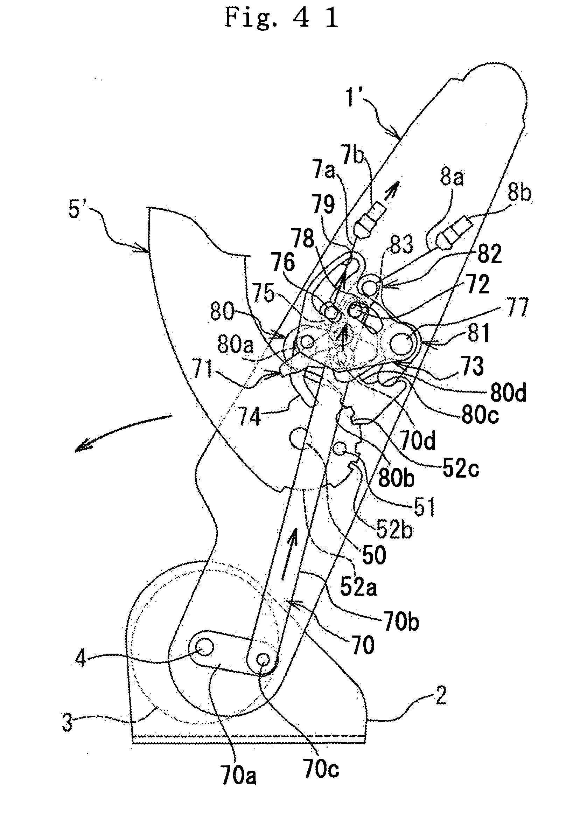

When the first operating lever 7 is pull-operated in order that the seat cushion is pivoted forward together with the seat back from the tipped-up position, dived down and stored in the space on the lower step portion of the vehicle body floor, the first link plate 73 is swung up as shown in Fig. 41 and the induction pin 72 of the first braking link 71 which is located at the forward end of the guide hole 78 of the first link plate 73 is drawn up, whereby the reclining lock means is unlocked as discussed above.

When the reclining lock means is unlocked, the induction pin 72 of the first braking link 71 is located at the forward end of the guide hole 78 of the first link plate 73 and escapingly moved toward the upper hole edge region 83c of the opening hole 83 formed in the second link plate 82, so that the second link plate 82 is not swung and the tipping-up lock means is maintained in the locked-state.

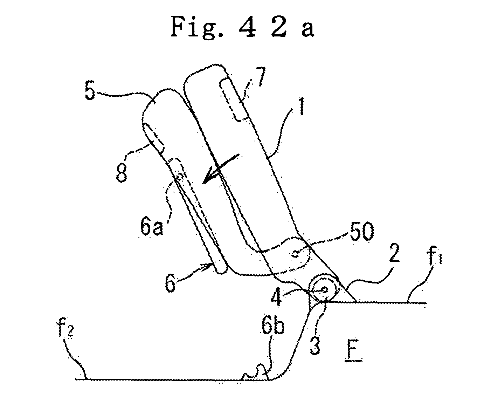

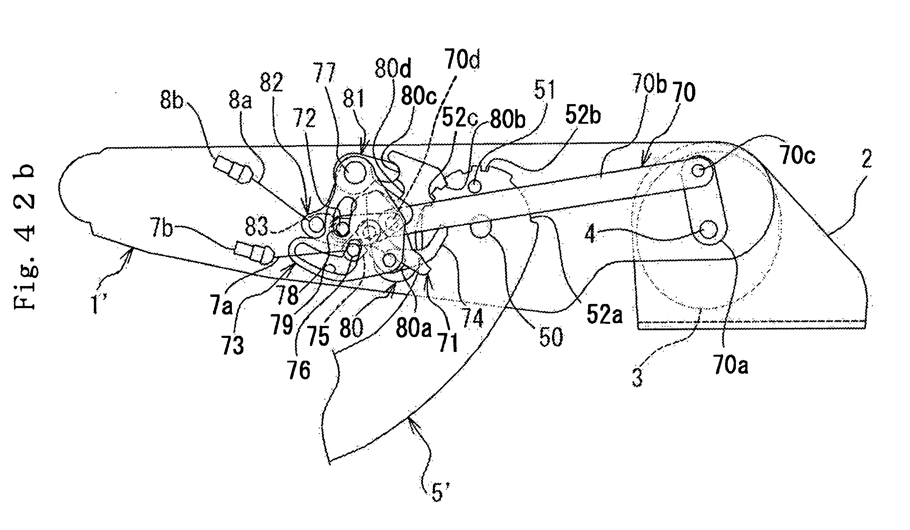

The tipping-up lock means is maintained in the locked-state, so that the seat cushion can be pivoted forward together with the seat back without pivoting with respect to the seat back as shown in Fig. 42a, and the entire vehicle seat can be dived down in the condition where the tipping-up lock means is maintained in the locked-state as shown in Fig. 42b.

When the entire seat is to be dived down and stored in the space on the lower step portion of the vehicle body floor, the person causes the vehicle seat to be pivoted forward by the certain extent, while holding the seat back with his/her hand, removes his/her hand from the seat back to the seat cushion and can cause the vehicle seat to be dived down while lifting the seat cushion down with his/her hand.

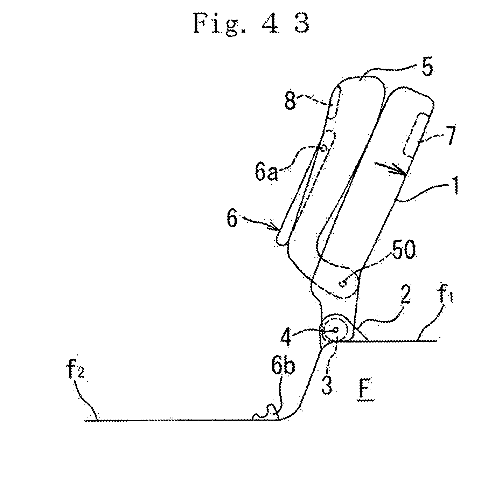

Even if the reclining lock means is unlocked by pull-operating of the first operating lever 7, the tipping-up lock means is maintained in the locked-state, so that the entire vehicle seat in the condition where the seat cushion 5 is tipped up can be angularly adjusted rearward by the extent corresponding to the length X of the recess portion of the first cutout tooth 52a of the side bracket 5' (Fig. 25), as shown in Fig. 43.

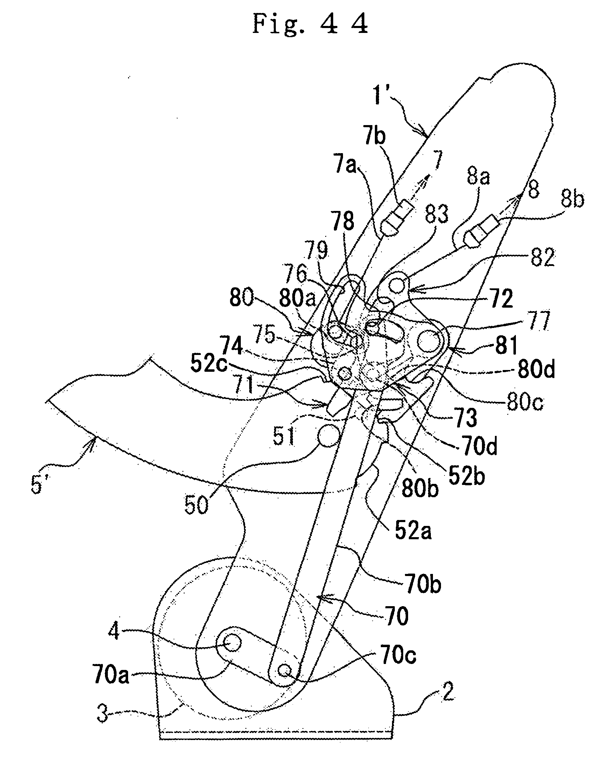

When the seat cushion 5 is locked in the middle position, the second braking link 74 is kicked up by the stopper pin 51 as shown in Fig. 44. At this time, the elongated bar 75 is pushed by the second braking link 74, whereby the wire retaining pin 76 is moved to a connecting hole portion between the horizontal engaging hole portion 79a and the vertical hole portion 79b of the control hole 79.

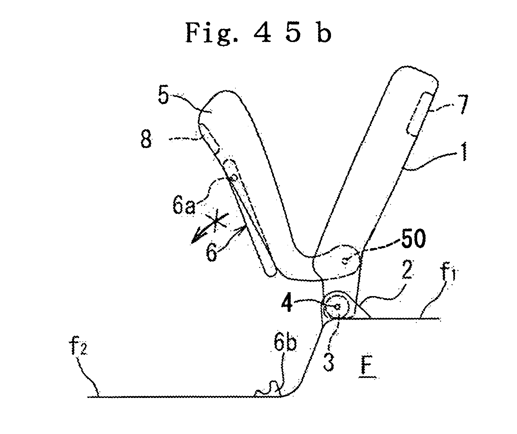

In the condition where the seat cushion 5 is located at the middle position, even if the first operating lever 7 is erroneously pull-operated, the wire retaining pin 76 is moved toward the vertical hole portion 79b from the connecting hole portion of the control hole 79 (Fig. 28) at this time as shown in Fig. 45a, so that the reclining lock means is idly operated so as not to be unlocked. Thus, the seat cushion is not allowed to be pivoted with respect to the seat back and maintained in the condition where it is locked with respect to the seat back as shown in Fig. 45b.

During changing of the posture of the entire vehicle seat which has been discussed above, namely, during the tipping-up movement of the seat cushion 5 or the diving-down movement of the entire vehicle seat, the stand leg portion 6 can be pivoted toward the stored position synchronously with such movement of the seat cushion or the entire vehicle seat. Moreover, during the returning movement of the entire vehicle seat to the used position thereof or the returning movement of the seat cushion in the tipped-up sate to the first used position, the stand leg portion 6 can be pivoted toward the developed position synchronously with such movement of the entire vehicle seat or the seat cushion.

Incidentally, while the case where the tipping-up lock means and the first and second releasing means are provided on the one side of the vehicle seat has been discussed with respect to the second embodiment of the present invention, second tipping-up lock means, third releasing means and fourth releasing means which are constructed in the same manner as the first tipping-up lock means, the first releasing means and the second releasing means are done, respectively, except that the third and fourth releasing means do not include any operating levers, may be provided on the other of the both sides of the vehicle seat. In this case, a fourth wire cable is connected between the first operating lever 7 and a link plate of the third releasing means and a fifth wire cable is connected between the second operating lever 8 and a link plate of the fourth releasing means, so that when the first operating lever is pull-operated, the first releasing means and the third releasing means can be synchronously actuated and, when the second operating lever is pull-operated, the second releasing means and the fourth releasing means can be synchronously actuated.

The terms and expressions which have been employed are used as terms of description and not of limitation, whereby it is recognized that various modifications are possible if within the scope of the invention as defined by the appended claims.

## Claims

1. A tip-up/dive-down type reclining seat for a vehicle,
said vehicle
including a vehicle body floor (F) having an upper step portion (f₁) and a lower step portion (f₂) ;
said tip-up/dive-down type reclining seat comprising:
a seat back (1) including a pair of first spaced apart side brackets;
a seat cushion (5) including a pair of second spaced apart side brackets;
a pair of third spaced apart base brackets (2) adapted to be mounted on said upper step portion (f₁);
reclining lock means for releasably locking said seat back (1) ;
said reclining lock means including a pair of reclining lock mechanisms (3) each provided between a lower end portion of corresponding one of said first spaced apart side brackets and corresponding one of said third spaced apart base brackets (2), so that when said reclining lock mechanisms (3) are locked, said seat back (1) can be locked in a substantially vertical posture, and when said reclining lock mechanisms (3) are unlocked, said seat back (1) is allowed to be pivoted forward and rearward and angularly adjusted;
said reclining lock mechanisms (3) including actuating shafts (4) coupled to each other through a connecting shaft;
said reclining lock mechanisms (3) being adapted to be unlocked when said actuating shafts (4) are rotated, and adapted to be locked when said actuating shafts (4) are rotated back;
said seat cushion (5) being pivotally supported at rear portions of said second spaced apart side brackets thereof to portions of said first spaced apart side brackets which are adjacent lower end portions of said first spaced apart side brackets, by first support pins (50), so that said seat cushion (5) is adapted to be tipped up;
a stand leg portion (6) pivotally supported to forward portions of said second spaced apart side brackets and adapted to be releasably engaged with respect to said lower step portion (f₂) of said vehicle body floor (F) so as to stand from said lower step portion (f₂);
tipping-up lock means on at least one (1') of said first spaced apart side brackets and at least one (5') of said second spaced apart side brackets for releasably locking said seat cushion (5) in a tipped-up position, at which said seat cushion (5) becomes opposed to said seat back (1) in a substantially vertical posture, and in a used position at which said seat cushion (5) takes a substantially horizontal posture;
first releasing means on said at least one (1') of said first spaced apart side brackets and said at least one (5') of said second spaced apart side brackets for unlocking said reclining lock means; and
second releasing means on said at least one (1') of said first spaced apart side brackets and said at least one (5') of said second spaced apart side brackets for unlocking said tipping-up lock means;
wherein an entire vehicle seat in a condition where said seat cushion (5) is located at said tipped-up position or in a condition where said seat back (1) is pivoted forward with respect to said seat cushion (5) in said used position can be dived down and stored in a space on said lower step portion (f₂) of said vehicle body floor (F),
**characterized in that** a stopper pin (51) is provided at said at least one (5') of said second spaced apart side brackets so as to be arranged upward of corresponding one of said first support pins (50);
said first releasing means includes a collapsible link bar member (70) coupled at a lower end portion thereof to corresponding one of said actuating shafts (4) of said reclining lock mechanisms (3), a braking link (71) having a laterally projecting induction pin (72) provided at an upper end thereof, and swingably connected at a substantially middle portion thereof to an upper end portion of said collapsible link bar member (70) by a second support pin (70d), said braking link (71) being adapted to be stoppingly engaged with said stopper pin (51) from a downward direction, a first link plate (73) swingably supported at a rearward portion thereof to said at least one (1') of said first spaced apart side brackets by a third support pin (77) and having a circular arc-shaped guide hole (78) extending around said second support pin (70d) of said braking link (71), said induction pin (72) of said braking link (71) being inserted through said guide hole (78) of said first link plate (73), and a first operating lever (7) coupled to said first link plate (73) via a wire (7a) of a first wire cable, so that when said first operating lever (7) is pull-operated, said first link plate (73), said braking link (71) and said collapsible link bar member (70) are pulled up, whereby said reclining lock mechanisms (3) are unlocked and, when said first operating lever (7) is released from a pulled-state, said first link plate (73), said braking link (71) and said collapsible link bar member (70) come down by gravity, whereby said reclining lock mechanisms (3) are locked;
said at least one (5') of said second spaced apart side brackets includes a rear portion having a substantially semicircular arc-shaped edge extending about a first support pin (50) of said at least one (5') of said second spaced apart side brackets;
said tipping-up lock means includes first and second spaced apart cutout teeth (52a, 52c) provided at said substantially semicircular arc-shaped edge, said first cutout tooth (52a) serving as means to facilitate causing of said seat cushion (5) to be locked in said used position and said second cutout tooth (52c) serving as means to facilitate causing of said seat cushion (5) to be locked in said tipped-up position, a latch (80) pivotally supported at a forward portion thereof to said at least one (1') of said first spaced apart side brackets by a fourth support pin (80a), said latch (80) having a projecting tooth (80b) provided at a lower edge region of a rearward portion thereof, said projecting tooth (80b) being adapted to be selectively and releasably engaged with said first and second cutout teeth (52a, 52c), and an engaging step portion (80c) formed in an upper region of said rearward portion of said latch (80), and a cam member (81) having a cam body and a lower portion extending downward from said cam body, said cam member (81) being swingably supported to said at least one (1') of said first spaced apart side brackets by said third support pin (77) of said first link plate (73) with said lower portion thereof being releasably abutted against said engaging step portion (80c) of said latch (80); and
said second releasing means includes a recess portion (80d) formed in said upper region of said rearward portion of said latch (80) and extending continuously from an edge of said engaging step portion (80c), said recess portion (80d) having a depth which is not less than a height of an engaged region between said projecting tooth (80b) of said latch (80) and each of said cutout teeth (52a, 52c) and allows said projecting tooth (80b) of said latch (80) to be escapingly disengaged from each of said cutout teeth (52a, 52c), a second link plate (82) supported to said at least one (1') of said first spaced apart side brackets by said third support pin (77) of said first link plate (73) so as to be swingable together with said cam member (81), said second link plate (82) being formed with an opening hole (83) receiving said induction pin (72) of said braking link (71), said opening hole (83) having a middle hole edge region (83a) against which said induction pin (72) of said braking link (71) is adapted to be engagingly abutted when the entire vehicle seat is located at a used position of the entire vehicle seat at which said seat cushion (5) takes the substantially horizontal posture and said seat back takes the substantially vertical posture, a lower hole edge region (83b) toward which said induction pin (72) of said braking link (71) is adapted to be escapingly moved from said middle hole edge region (83a) when said seat cushion (5) is tipped up, and an upper hole edge region (83c) toward which said induction pin (72) of said braking link (71) is adapted to be escapingly moved when said seat cushion (5) is in said tipped-up condition and said reclining lock means is unlocked, and a second operating lever (8) coupled to said second link plate (82) via a wire (8a) of a second wire cable, so that when said second operating lever (8) is pull-operated, said cam member (81) is swung up in such a manner that said lower portion of said cam member (81) is disengaged from said engaging step portion (80c) of said latch (80) and slips into said recess portion (80d) of said latch (80), and as said cam member (81) is swung up, said latch (80) is swung up in such a manner that said projecting tooth (80b) of said latch (80) is disengaged from any one of said first and second cutout teeth (52a, 52c) and, when the second operating lever (8) is released from a pulled-state, said second link plate (82), said cam member (81), and said latch (80) come down by gravity, whereby said projecting tooth (80b) of said latch (80) is engaged with any one of said first and second cutout teeth (52a, 52c).

2. A tip-up/dive-down type reclining seat for a vehicle according to claim 1, wherein an angle of said cam member (81) with respect to said latch (80) is set in such a manner that an angle (θ) between a reference line (L₁) connecting an axial center (O₁) of said fourth support pin (80a) of said latch (80) and an abutment point (P) of said cam member (81) against said engaging step portion (80c) of said latch (80), and a line (L₂) connecting an axial center (O₂) of said second support pin (77) of said cam member (81) and said abutment point (P) is kept to be an acute angle, so that engagement between said projecting tooth (80b) of said latch (80) and any one of said first and second cutout teeth (52a, 52c) can be maintained by said angle of said cam member (81) relative to said latch (80).

3. A tip-up/dive-down type reclining seat for a vehicle according to claim 1 or 2, wherein said lower portion of said cam member (81) is formed into a substantially semielliptical shape, a bottom surface of said engaging step portion (80c) of said latch (80) is formed so as to have a substantially J-shape which allows said lower portion of said cam member (81) to be easily abutted against said engaging step portion (80c) of said latch (80), and said recess portion (80d) of said latch (80) is formed so as to have a substantially U-shape which has a depth larger than the height of said engaged region between said projecting tooth (80b) and each of said cutout teeth (52a, 52c) and fits said lower portion of said cammember (81).

4. A tip-up/dive-down type reclining seat for a vehicle according to claim 1, wherein said stand leg portion (6) is typically urged toward a stored position under said seat cushion (5) by a spring (10) which is retained at one end thereof to an upper end region of said stand leg portion (6) and retained at the other end thereof to said at least one (5') of said second spaced apart side brackets and said vehicle seat further includes a third wire cable (11) which is coupled at one end portion of a wire (11a) thereof to said upper end region of said stand leg portion (6) and coupled at the other end portion of said wire (11a) of said third wire cable (11) to said seat back (1), so that when said tipping-up lock means is unlocked and said seat cushion (5) is tipped up, said wire (11a) of said third wire cable (11) is pushed so as to overcome an action of said spring (10) and allow said stand leg portion (6) to be pivoted toward a developed position and as said seat cushion (5) is pivoted toward said tipped-up position, said action of said spring (10) is exerted on said wire (11a) of said third wire cable (11).

5. A tip-up/dive-down type reclining seat for a vehicle according to any one of claims 1 to 4, wherein said tipping-up lock means is also adapted to releasably lock said seat cushion in a middle position between said tipped-up position and said used position and further includes a third cutout tooth (52b) provided at said substantially semicircular arc-shaped edge of said at least one (5') of said second spaced apart side brackets so as to be arranged between said first and second cutout teeth (52a, 52c) and serving as means to facilitate causing of said seat cushion (5) to be locked in said middle position, said projecting tooth (80b) of said latch (80) being adapted to be selectively and releasably engaged with said first, second, and third cutout teeth (52a, 52c, 52b);
said first link plate (73) has a substantially L-shaped control hole (79) which includes a horizontal engaging hole portion (79a) and a vertical hole portion (79b) vertically extending so as to continue from said horizontal engaging hole portion (79a);
said first releasing means further includes a second braking link (74) mounted at a middle portion thereof to said first link plate (73) in such a manner that a lower portion of said second braking link (74) is adapted to be abutted against said stopper pin (51) from a direction opposite to the direction from which said lower portion of said first braking link (71) is abutted against said stopper pin (51), and an elongated bar (75) collapsibly supported to an upper end portion of said second braking link (74) and having a wire retaining pin (76) projecting laterally from said elongated bar (75) at a free end thereof, said wire retaining pin (76) being inserted through said control hole (79) of said first link plate (73) ; and
said first wire cable (7a) is connected to said wire retaining pin (76) of said elongated bar (75), so that said first operating lever (7) is coupled, via said wire (7a) of said first wire cable and said wire retaining pin (76) inserted through said control hole (79) of the first link plate (73), to said first link plate (73).

## Patentansprüche

1. Hoch- und herunterklappbarer Liegesitz für ein Fahrzeug, wobei
das Fahrzeug
einen Fahrzeugkarosserieboden (F) mit einem oberen Absatz- bzw. Stufenabschnitt (f1) und einem unteren Stufenabschnitt (f2) umfasst;
der hoch- und herunterklappbare Liegesitz umfasst:
eine Sitzlehne (1), die ein Paar erster beabstandeter Seitenträger bzw. Halterungen umfasst;
ein Sitzpolster (5), das ein Paar zweiter beabstandeter Seitenhalterungen umfasst;
ein Paar dritter beabstandeter Basishalterungen (2), die geeignet sind, auf den oberen Stufenabschnitt (f1) montiert zu werden;
Liegearretiermittel zum lösbaren Arretieren der Sitzlehne (1) ;
wobei die Liegearretiermittel ein Paar von Liegearretiermechanismen (3) umfassen, von denen jeder zwischen einem unteren Endabschnitt einer entsprechenden der ersten beabstandeten Seitenhalterungen und einer entsprechenden der dritten beabstandeten Basishalterungen (2) bereitgestellt ist, so dass, wenn die Liegearretiermechanismen (3) arretiert sind, die Sitzlehne (1) in einer im Wesentlichen vertikalen Stellung arretiert werden kann, und wenn die Liegearretiermechanismen (3) unarretiert sind, zugelassen wird, dass die Sitzlehne (1) vorwärts und rückwärts geschwenkt und die Neigung eingestellt wird;
wobei die Liegearretiermechanismen (3) Betätigungsschäfte (4) umfassen, die durch einen Verbindungsschaft miteinander gekoppelt sind;
wobei die Liegearretiermechanismen (3) geeignet sind,
entsperrt zu werden, wenn die Betätigungsschäfte (4) gedreht werden, und geeignet sind, arretiert zu wenden,
wenn die Betätigungsschäfte (4) zurück gedreht werden;
wobei das Sitzpolster (5) durch erste Haltestifte (50) schwenkbar zu Abschnitten der ersten beabstandeten Seitenhalterungen, die benachbart zu unteren Endabschnitten der ersten beabstandeten Seitenhalterungen sind, an hinteren Abschnitten seiner zweiten beabstandeten Seitenhalterungen gehalten wird, so dass das Sitzpolster (5) geeignet ist, hochgeklappt zu werden;
einen Standbeinabschnitt (6), der schwenkbar zu vorderen Abschnitten der zweiten beabstandeten Seitenhalterungen gehalten wird und geeignet ist, lösbar in Bezug auf den unteren Stufenabschnitt (f2) des Fahrzeugkarosseriebodens (F) in Eingriff gebracht zu werden, um auf dem unteren Stufenabschnitt (f2) zu stehen;
Hochklapparretiermittel auf wenigstens einer (1') der ersten beabstandeten Seitenhalterungen und wenigstens einer (5') der zweiten beabstandeten Seitenhalterungen zum lösbaren Arretieren des Sitzpolsters (5) in einer hochgeklappten Position, in der das Sitzpolster (5) in einer im Wesentlichen vertikalen Stellung entgegengesetzt zu der Sitzlehne (1) wird, und in einer Verwendungsposition, in der das Sitzpolster (5) eine im Wesentlichen horizontale Stellung einnimmt;
ein erstes Lösemittel auf der wenigstens einen (1') der ersten beabstandeten Seitenhalterungen und der wenigstens einen (5') der zweiten beabstandeten Seitenhalterungen zum Entsperren der Liegearretiermittel; und
ein zweites Lösemittel auf der wenigstens einen (1') der ersten beabstandeten Seitenhalterungen und der wenigstens einen (5') der zweiten beabstandeten Seitenhalterungen zum Entsperren der Hochklapparretiermittel;
wobei ein ganzer Fahrzeugsitz in einem Zustand, in dem das Sitzpolster (5) sich in der hochgeklappten Position befindet, oder in einem Zustand, in dem die Rückenlehne (1) in Bezug auf das Sitzpolster (5) in der Verwendungsposition nach vorne geklappt ist,
heruntergeklappt und in einem Raum auf dem unteren Stufenabschnitt (f2) des Fahrzeugkarosseriebodens (F) gelagert werden kann,
**dadurch gekennzeichnet, dass** ein Anschlagstift (51) an der wenigstens einen der zweiten beabstandeten Seitenhalterungen bereitgesellt ist, um aufwärts von dem entsprechenden der ersten Haltestifte (50) angeordnet zu sein;
wobei das ersten Lösemittel umfasst: ein zusammenklappbares Verbindungsstangenelement (70), das an seinem unteren Endabschnitt mit entsprechenden der Betätigungsschäfte (4) der Liegearretiermechanismen (3) gekoppelt ist, eine Bremsverbindung (71) mit einem seitlich vorstehenden Einführungsstift (72), der an seinem oberen Ende bereitgestellt ist und durch einen zweiten Haltestift (70d) schwingbar mit seinem im Wesentlichen mittleren Abschnitt mit einem oberen Endabschnitt d e s zusammenklappbaren Verbindungsstangenelement (70) verbunden ist, wobei die Bremsverbindung (71) geeignet ist, aus einer Abwärtsrichtung stoppend mit dem Anschlagstift (51) in Eingriff gebracht zu werden, eine erste Verbindungsplatte (73), die durch einen dritten Haltestift (77) schwingbar zu der wenigstens einen (1') der beabstandeten Seitenhalterungen an ihrem hinteren Abschnitt gehalten wird und ein kreisförmiges bogenförmiges Führungsloch (78) hat, das sich um den zweiten Haltestift (70d) der Bremsverbindung (71) erstreckt, wobei der Zuführungsstift (72) der Bremsverbindung (71) durch das Führungsloch (78) der ersten Verbindungsplatte (73) eingesetzt ist, und
einen ersten Bedienhebel (7), der über einen Draht (7a) des ersten Drahtseils mit der ersten Verbindungsplatte (73) gekoppelt ist, so dass, wenn der erste Bedienhabel (7) zugbedient wird, die erste Verbindungsplatte (73), die Bremsverbindung (71) und das zusammenklappbare Verbindungsstangenelement hochgezogen werden, wodurch die Liegearretiermechanismen (3) entsperrt werden, und wenn der erste Bedienhebel (7) aus dem gezogenen Zustand gelöst wird, die erste Verbindungsplatte (73), die Bremsverbindung (71) und das zusammenklappbare Verbindungsstangenelement (70) durch die Schwerkraft herunterkommen, wodurch die Liegearretiermechanismen (3) arretiert werden;
wobei wenigstens eine (5') der zweiten beabstandeten Seitenhalterungen einen hinteren Abschnitt mit einem im Wesentlichen halbkreisförmigen bogenförmigen Rand, der sich um einen ersten Haltestift (50) der wenigstens einen (5') der zweiten beabstandeten Seitenhalterungen erstreckt, umfasst;
wobei die Hochklapparretiermittel umfassen: erste und
zweite beabstandete ausgeschnittene Zähne (52a, 52c), die an dem im Wesentlichen halbkreisförmigen bogenförmigen Rand bereitgestellt sind, wobei der erste ausgeschnittene Zahn (52a) als Mittel dient, um zu erleichtern, dass bewirkt wird, dass das Sitzpolster (5) in der Verwendungsposition arretiert wird, und der zweite ausgeschnittene Zahn (52c) als Mittel dient, um zu erleichtern, dass bewirkt wird, dass das Sitzpolster (5) in der hochgeklappten Position arretiert wird, einen Riegel (80), der durch einen vierten Haltestift (80a) schwenkbar an seinem vorderen Ende an der wenigstens einen (1') der ersten beabstandeten Seitenhalterungen gehalten wird, wobei der Riegel (80) einen vorstehenden Zahn (80b) hat, der in einem unteren Randbereich seines hinteren Abschnitts bereitgestellt ist, wobei der vorstehende Zahn (80b) geeignet ist, selektiv und lösbar mit den ersten und zweiten ausgeschnittenen Zähnen (52a, 52c) in Eingriff gebracht zu werden, und einen Eingreifstufenabschnitt (80c), der in einem oberen Bereich des hinteren Abschnitts des Riegels (80) bereitgestellt ist, und ein Nockenelement (81) mit einem Nockenkörper und einem unteren Abschnitt, der sich von dem Nockenkörper nach unten erstreckt, wobei das Nockenelement (81) durch den dritten Haltestift (77) der ersten Verbindungsplatte (73) schwingbar zu der wenigstens einen (1') der ersten beabstandeten Seitenhalterungen gehalten wird, wobei sein unterer Abschnitt lösbar an dem Eingreifstufenabschnitt (80c) des Riegels (80) anliegt; und
wobei das zweite Lösemittel umfasst: einen vertieften Abschnitt (80d), der in dem oberen Bereich des hinteren Abschnitts des Riegels (80) bereitgestellt ist und sich kontinuierlich von einem Rand des Eingreifstufenabschnitts (80c) erstreckt, wobei der vertiefte Abschnitt (80d) eine Tiefe von nicht weniger als einer Höhe eines Eingreifabschnitts zwischen dem vorstehenden Zahn (80b) des Riegels (80) und jedem der ausgeschnittenen Zähne (52a, 52c) hat und zulässt, dass der vorstehende Zahn (80b) des Riegels (80) entkommend aus den ausgeschnittenen Zähnen (52a, 52b) gelöst wird,
eine zweite Verbindungsplatte (82), die durch den dritten Haltestift (77) der ersten Verbindungsplatte (73) an wenigstens einer (1') der ersten beabstandeten Seitenhalterungen gehalten wird, um zusammen mit dem Nockenelement (81) schwingbar zu sein, wobei die zweite Verbindungsplatte (82) mit einem Öffnungsloch (83) ausgebildet ist, das den Einführungsstift (72) der Bremsverbindung (71) aufnimmt, wobei das Öffnungsloch (83) einen mittleren Lochrandabschnitt (83) hat, gegen den der Einführungsstift (72) der Bremsverbindung (71) geeignet ist, eingreifend anzuliegen, wenn der ganze Fahrzeugsitz sich in einer Verwendungsposition des ganzen Fahrzeugsitzes befindet, in welcher das Sitzpolster (5) die im Wesentlichen horizontale Stellung einnimmt und die Sitzlehne die im Wesentlichen vertikale Stellung einnimmt, einen unteren Lochrandabschnitt (83b), in Richtung dessen der Einführungsstift (72) der Bremsverbindung (71) geeignet ist, von dem mittleren Lochrandbereich (83a) entkommend bewegt zu werden, wenn das Sitzpolster (5) hochgeklappt ist, und einen oberen Lochrandabschnitt (83c), in Richtung dessen der Einführungsstift (72) der Bremsverbindung (71) geeignet ist, entkommend bewegt zu werden, wenn das Sitzpolster (5) in dem hochgeklappten Zustand ist, und das Liegearretiermittel entsperrt ist, und einen zweiten Bedienhebel (8), der über einen Draht (8a) eines zweiten Drahtseils mit der zweiten Verbindungsplatte (82) gekoppelt ist, so dass, wenn der zweite Bedienhebel (8) zugbetätigt wird, das Nockenelement (81) in einer derartigen Weise nach oben geschwungen wird, dass der untere Abschnitt des Nockenelements (81) von dem Eingreifstufenabschnitt (80c) des Riegels (80) gelöst wird und in den vertieften Abschnitt (80d) des Riegels (80) rutscht, und wenn das Nockenelement (81) nach oben geschwungen wird, der Riegel (80) in einer derartigen Weise nach oben geschwungen wird, dass der vorstehende Zahn (80b) des Riegels (80) von jedem der ersten und zweiten ausgeschnittenen Zähne (52a, 52c) gelöst wird, und wenn der zweite Bedienhebel (8) aus einem gezogenen Zustand gelöst wird, die zweite Verbindungsplatte (82), das Nockenelement (81) und der Riegel (80) durch die Schwerkraft herunterkommen, wodurch der vorstehende Zahn (80b) des Riegels (80) mit irgendeinem der ersten und zweiten ausgeschnittenen Zähne (52a, 52c) in Eingriff kommt.

2. Hoch- und herunterklappbarer Liegesitz für ein Fahrzeug nach Anspruch 1, wobei ein Winkel des Nockenelements (81) in Bezug auf den Riegel (80) in einer derartigen Weise festgelegt wird, dass ein Winkel (□) zwischen einer Bezugslinie (L1), welche eine axiale Mitte (01) des vierten Haltestifts (80a) des Riegels (80) und einen Auflagepunkt (P) des Nockenelements (81) gegen den Eingreifstufenabschnitt (80c) des Riegels (80) verbindet, und einer Linie (L2), welche die axiale Mitte (02) des zweiten Haltestifts (77) des Nockenelements (81) und den Auflagepunkt (P) verbindet, in einem spitzen Winkel gehalten wird, so dass der Eingriff zwischen dem vorstehenden Zahn (80b) des Riegels (80) und jedem der ersten und zweiten ausgeschnittenen Zähne (52a, 52c) durch den Winkel des Nockenelements (81) relativ zu dem Riegel (80) aufrechterhalten werden kann.

3. Hoch- und herunterklappbarer Liegesitz für ein Fahrzeug nach Anspruch 1 oder 2, wobei der untere Abschnitt des Nockenelements (81) zu einer im Wesentlichen halbelliptischen Form ausgebildet ist, eine Bodenoberfläche des Eingreifstufenabschnitts (80c) des Riegels (80) derart ausgebildet ist, dass sie im Wesentlichen eine J-Form hat, die zulässt, dass der untere Abschnitt des Nockenelements (81) leicht gegen den Eingreifstufenabschnitt (80c) des Riegels (80) zum Anliegen gebracht wird, und der vertiefte Abschnitt (80d) des Riegels (80) so ausgebildet ist, dass er im Wesentlichen eine U-Form mit einer Tiefe hat, die größer als die Höhe des Eingreifbereichs zwischen dem vorstehenden Zahn (80b) und jedem der ausgeschnittenen Zähne (52a, 52c) ist und in den unteren Abschnitt des Nockenelements (81) passt.

4. Hoch- und herunterklappbarer Liegesitz für ein Fahrzeug nach Anspruch 1, wobei der Standbeinabschnitt (6) typischerweise durch eine Feder (10), die an einem ihrer Enden an einem oberen Endbereich des Standbeinabschnitts (6) gehalten wird und an ihrem anderen Ende an der wenigstens einen (5') der zweiten beabstandeten Seitenhalterungen gehalten wird, in eine Lagerposition unter dem Sitzpolster (5) gedrängt wird, und wobei der Fahrzeugsitz ferner ein drittes Drahtseil (11) umfasst, das an einem Endabschnitt eines seiner Drähte (11a) mit dem oberen Endbereich des Standbeinabschnitts (6) gekoppelt ist und an dem anderen Endabschnitt des Drahts (11a) des dritten Drahtseils (11) mit der Sitzlehne (1) gekoppelt ist, so dass der Draht (11a) des dritten Drahtseils (11), wenn das Hochklapparretiermittel entsperrt wird und das Sitzpolster (5) hochgeklappt wird, geschoben wird, um eine Wirkung der Feder (10) zu überwinden und zuzulassen, dass der Standbeinabschnitt (6) in Richtung einer entfalteten Position geschwenkt wird, und wobei, wenn das Sitzpolster (5) in Richtung der hochgeklappten Position geschwenkt wird, die Wirkung der Feder (10) auf den Draht (11a) des dritten Drahtseils (11) ausgeübt wird.

5. Hoch- und herunterklappbarer Liegesitz für ein Fahrzeug nach einem der Ansprüche 1 bis 4, wobei das Hochklapparretiermittel auch geeignet ist, das Sitzpolster in einer mittleren Position zwischen der hochgeklappten Position und der Verwendungsposition lösbar zu arretieren, und ferner einen dritten ausgeschnittenen Zahn (52b) umfasst, der an dem im Wesentlichen halbkreisförmigen bogenförmigen Rand der wenigstens einen (5') der zweiten beabstandeten Seitenhalterungen bereitgestellt ist, um zwischen ersten und zweiten ausgeschnittenen Zähnen (52a, 52c) angeordnet zu sein, und der als ein Mittel dient, um zu erleichtern, dass bewirkt wird, dass das Sitzpolster (5) in der mittleren Position arretiert wird, wobei der vorstehende Zahn (80b) des Riegels (80) geeignet ist, um selektiv und lösbar mit den ersten, zweiten und dritten ausgeschnittenen Zähnen (52a, 52c, 52b) in Eingriff gebracht zu werden;
wobei die erste Verbindungsplatte (73) ein im Wesentlichen L-förmiges Steuerloch (79) hat, das einen horizontalen Eingreiflochabschnitt (79a) und einen vertikalen Lochabschnitt (79b) umfasst, der sich vertikal erstreckt, um sich von dem horizontalen Eingreiflochabschnitt (79a) fortzusetzen;
wobei das erste Lösemittel ferner umfasst: eine zweite Bremsverbindung (74), die in ihrem Mittelabschnitt in einer derartigen Weise an die erste Verbindungsplatte (73) montiert ist, dass ein unterer Abschnitt der zweiten Bremsverbindung (74) geeignet ist, aus einer Richtung entgegegengesetzt zu der Richtung, aus welcher der untere Abschnitt der ersten Bremsverbindung (71) gegen den Anschlagstift (51) zum Anliegen gebracht wird, gegen den Anschlagstift (51) zum Anliegen gebracht zu werden, und eine verlängerte Stange (75), die zusammenklappbar an einem oberen Endabschnitt der zweiten Bremsverbindung (74) gehalten wird und einen Drahtrückhaltestift (76) hat, der an seinem freien Ende seitlich von der verlängerten Stange (75) vorsteht, wobei der Drahtrückhaltestift (76) durch das Steuerloch (79) der ersten Verbindungsplatte (73) eingesetzt ist; und
wobei das erste Drahtseil (7a) mit dem Drahtrückhaltestift (76) der verlängerten Stange (75) verbunden ist, so dass der erste Bedienhebel (7) über den Draht (7a) des ersten Drahtseils und den Drahtrückhaltestift (76), der durch das Steuerloch (79) der ersten Verbindungsplatte (73) eingesetzt ist, mit der ersten Verbindungsplatte (73) gekoppelt ist.

## Revendications

1. Siège inclinable à basculement/abaissement pour un véhicule,
ledit véhicule
comprenant un plancher de carrosserie de véhicule (F) ayant une partie d'étage supérieur (f1) et une partie d'étage inférieur (f2) ;
ledit siège inclinable à basculement/abaissement comprenant :
un dossier de siège (1) comprenant une paire de premiers supports latéraux espacés ;
un coussin de siège (5) comprenant une paire de deuxièmes supports latéraux espacés ;
une paire de troisièmes supports de base espacés (2) aptes à être montés sur ladite partie d'étage supérieur (f1) ;
un moyen de verrou pour siège inclinable pour verrouiller de manière libérable ledit dossier de siège (1) ;
ledit moyen de verrou pour siège inclinable com-prenant une paire de mécanismes de verrou pour siège inclinable (3) étant chacun fourni entre une partie d'extrémité inférieure de l'un corres-pondant desdits premiers supports latéraux espacés et l'un correspondant desdits troisièmes supports de base espacés (2), de sorte que lorsque lesdits mécanismes de verrou pour siège inclinable (3) sont verrouillés, ledit dossier de siège (1) peut être verrouillé dans une posture sensiblement verticale, et lorsque lesdits méca-nismes de verrou pour siège inclinable (3) sont déverrouillés, ledit dossier de siège (1) est autorisé à être pivoté vers l'avant et vers l'arrière et à être ajusté angulairement ;
lesdits mécanismes de verrou pour siège incli-nable (3) comprenant des arbres d'actionnement (4) couplés l'un à l'autre à travers un arbre de raccordement ;
lesdits mécanismes de verrou pour siège incli-nable (3) étant aptes à être déverrouillés lorsque lesdits arbres d'actionnement (4) sont tournés, et aptes à être verrouillés lorsque lesdits arbres d'actionnement (4) sont tournés en arrière ;
ledit coussin de siège (5) étant supporté de manière à pouvoir pivoter au niveau des parties arrière desdits deuxièmes supports latéraux espa-cés de celui-ci sur des parties desdits premiers supports latéraux espacés qui sont adjacents à des parties d'extrémité inférieure desdits pre-miers supports latéraux espacés, par des premières broches de support (50), de sorte que ledit coussin de siège (5) est apte à être basculé vers le haut;
une partie de pied (6) supportée de manière à pouvoir pivoter sur des parties avant desdits deuxièmes supports latéraux espacés et apte à être mise en prise de manière libérable avec ladite partie d'étage inférieur (f2) dudit plancher de carrosserie de véhicule (F) pour se lever de ladite partie d'étage inférieur (f2) ;
un moyen de verrouillage à basculement sur au moins un (1') desdits premiers supports latéraux espacés et au moins un (5') desdits deuxièmes supports latéraux espacés pour verrouiller de manière libérable ledit coussin de siège (5) à une position basculée vers le haut, à laquelle ledit coussin de siège (5) devient opposé audit dossier de siège (1) dans une posture sensi-blement verticale, et à une position utilisée à laquelle ledit coussin de siège (5) prend une posture sensiblement horizontale ;
un premier moyen de libération sur ledit au moins un (1') desdits premiers supports latéraux espa-cés et ledit au moins un (5') desdits deuxièmes supports latéraux espacés pour déverrouiller ledit moyen de verrou pour siège inclinable ;
un deuxième moyen de libération sur ledit au moins un (1') desdits premiers supports latéraux espacés et ledit au moins un (5') desdits deu-xièmes supports latéraux espacés pour déverrouil-ler ledit moyen de verrouillage à basculement ;
dans lequel tout un siège de véhicule dans une condition dans laquelle ledit coussin de siège (5) est situé à ladite position basculée vers le haut ou dans une condition dans laquelle ledit dossier de siège (1) est pivoté vers l'avant par rapport audit coussin de siège (5) à ladite position utilisée peut être abaissé et rangé dans un espace sur ladite partie d'étage inférieur (f2) dudit plancher de carrosserie de véhicule (F),
**caractérisé en ce qu'**une broche de butée (51) est fournie audit au moins un (5') desdits deuxièmes supports latéraux espacés de manière à être agencée vers le haut de l'une correspondante des-dites premières broches de support (50) ;
ledit premier moyen de libération comprend un élément de barre de liaison rétractable (70) couplé à une partie d'extrémité inférieure de celui-ci à l'un correspondant desdits arbres d'actionnement (4) desdits mécanismes de verrou pour siège inclinable (3), une liaison de freinage (71) ayant une broche d'induction se proje-tant latéralement (72) fournie à une extrémité supérieure de celle-ci, et connectée de manière à pouvoir balancer à une partie sensiblement au milieu de celle-ci à une partie d'extrémité supérieure dudit élément de barre de liaison rétractable (70) par une deuxième broche de support (70d), ladite liaison de freinage (71) étant apte à être mise en prise de manière à arrêter avec ladite broche de butée (51) à partir d'une direction vers le bas, une première plaque de liaison (73) supportée de manière à pouvoir balancer à une partie vers l'arrière de celle-ci sur ledit au moins un (1') desdits premiers supports latéraux espacés par une troisième broche de support (77) et ayant un trou de guidage en forme d'arc circulaire (78) s'étendant autour de ladite deuxième broche de support (70d) de ladite liaison de freinage (71), ladite broche d'induc-tion (72) de ladite liaison de freinage (71) étant insérée à travers ledit trou de guidage (78) de ladite première plaque de liaison (73),
et un premier levier de commande (7) couplé à ladite première plaque de liaison (73) par l'intermé-diaire d'un fil (7a) d'un premier câble filaire, de sorte que lorsque ledit premier levier de commande (7) est tiré, ladite première plaque de liaison (73), ladite liaison de freinage (71) et ledit élément de barre de liaison rétractable (70) sont tirés vers le haut, de telle manière que lesdits mécanismes de verrou pour siège incli-nable (3) sont déverrouillés et, lorsque ledit premier levier de commande (7) est libéré d'un état tiré,
ladite première plaque de liaison (73), ladite liaison de freinage (71) et ledit élément de barre de liaison rétractable (70) descendent par gravité, de telle manière que lesdits méca-nismes de verrou pour siège inclinable (3) sont verrouillés ;
ledit au moins un (5') desdits deuxièmes supports latéraux espacés comprend une partie arrière ayant un bord sensiblement en forme d'arc semi-circulaire s'étendant autour d'une première broche de support (50) dudit au moins un (5') desdits deuxièmes supports latéraux espacés ;
ledit moyen de verrouillage à basculement com-prend des première et deuxième dents de découpe espacées (52a, 52c) fournies audit bord sensi-blement en forme d'arc semi-circulaire, ladite première dent de découpe (52a) servant de moyen pour faciliter le verrouillage dudit coussin de siège (5) à ladite position utilisée et ladite deuxième dent de découpe (52c) servant de moyen pour faciliter le verrouillage dudit coussin de siège (5) à ladite position basculée vers le haut, un verrou (80) supporté de manière à pouvoir pivoter à une partie vers l'avant de celui-ci sur ledit au moins un (1') desdits premiers supports latéraux espacés par une quatrième broche de support (80a), ledit verrou (80) ayant une dent saillante (80b) fournie à une région de bord inférieur d'une partie vers l'arrière de celui-ci, ladite dent saillante (80b) étant apte à être mise en prise de manière sélective et
libérable avec lesdites première et deuxième dents de découpe (52a, 52c), et une partie d'étage se met-tant en prise (80c) formée dans une région supé-rieure de ladite partie vers l'arrière dudit verrou (80), et un élément de came (81) ayant un corps de came et une partie inférieure s'étendant vers le bas à partir dudit corps de came,
ledit élément de came (81) étant supporté de manière à pouvoir balancer sur ledit au moins un (1') desdits premiers supports latéraux espacés par ladite troisième broche de support (77) de ladite première plaque de liaison (73) avec ladite par-tie inférieure de celle-ci qui est aboutée de manière libérable contre ladite partie d'étage se mettant en prise (80c) dudit verrou (80) ; et
ledit deuxième moyen de libération comprend une partie d'évidement (80d) formée dans ladite région supérieure de ladite partie vers l'arrière dudit verrou (80) et
s'étendant continuellement d'un bord de ladite partie d'étage se mettant en prise (80c), ladite partie d'évidement (80d) ayant une profondeur qui n'est pas inférieure à une hauteur d'une région mise en prise entre ladite dent saillante (80b) dudit verrou (80) et chacune desdites dents de découpe (52a, 52c) et permet à ladite dent saillante (80b) dudit verrou (80) d'être mise hors prise de manière à pouvoir s'échapper de chacune desdites dents de découpe (52a, 52c), une deuxième plaque de liaison (82) supportée sur ledit au moins un (1') desdits premiers supports latéraux espacés par ladite troisième broche de support (77) de ladite pre-mière plaque de liaison (73) de manière à pouvoir balancer avec ledit élément de came (81), ladite deuxième plaque de liaison (82) étant formée avec un trou d'ouverture (83) recevant ladite broche d'induction (72) de ladite liaison de freinage (71), ledit trou d'ouverture (83) ayant une région de bord de trou de milieu (83a) contre laquelle ladite broche d'induction (72) de ladite liaison de freinage (71) est apte à s'abouter de manière à se mettre en prise lorsque tout le siège de véhicule est situé à une position utilisée de tout le siège de véhicule à laquelle ledit coussin de siège (5) prend la posture sensiblement horizontale et ledit dossier de siège prend la posture sensiblement verticale, une région de bord de trou inférieure (83) vers laquelle ladite broche d'induction (72) de ladite liaison de freinage (71) est apte à être déplacée de manière à s'échapper à partir de ladite région de bord de trou de milieu (83a) lorsque ledit coussin de siège (5) est basculé vers le haut, et
une région de bord de trou supérieure (83c) vers laquelle ladite broche d'induction (72) de ladite liaison de freinage (71) est apte à être déplacée de manière à pouvoir s'échapper lorsque ledit coussin de siège (5) est dans ladite condition basculée vers le haut et ledit moyen de verrou pour siège inclinable est déverrouillé, et un deuxième levier de commande (8) couplé à ladite deuxième plaque de liaison (82) par le biais d'un fil (8a) d'un deuxième câble filaire, de sorte que lorsque ledit deuxième levier de commande (8) est tiré, ledit élément de came (81) est balancé vers le haut de telle manière que ladite partie inférieure dudit élément de came (81) est mise hors prise de ladite partie d'étage se mettant en prise (80c) dudit verrou (80) et glisse dans ladite partie d'évidement (80d) dudit verrou (80), et lorsque ledit élément de came (81) est balancé vers le haut, ledit verrou (80) est balancé vers le haut de telle manière que ladite dent sail-lante (80d) dudit verrou (80) est mise hors prise de l'une quelconque desdites première et deuxième dents de découpe (52a, 52c) et, lorsque le deuxième levier de commande (8) est libéré d'un état tiré, ladite deuxième plaque de liaison (82), ledit élément de came (81) et ledit verrou (80) descendent par gravité, de telle manière que ladite dent saillante (80b) dudit verrou (80) est mise en prise avec l'une quelconque desdites première et deuxième dents de découpe (52a, 52c).

2. Siège inclinable à basculement/abaissement pour un véhicule selon la revendication 1, dans lequel un angle dudit élément de came (81) par rapport audit verrou (80) est réglé de telle manière qu'un angle (θ) entre une ligne de référence (L1) reliant un centre axial (01) de ladite quatrième broche de support (80a) dudit verrou (80) et un point d'aboutement (P) dudit élément de came (81) contre ladite partie d'étage se mettant en prise (80c) dudit verrou (80), et une ligne (L2) reliant un centre axial (02) de ladite deuxième broche de support (77) dudit élément de came (81) et ledit point d'aboutement (P) est maintenu à un angle aigu, de sorte que la mise en prise entre ladite dent saillante (80b) dudit verrou (80) et l'une quelconque desdites première et deuxième dents de découpe (52a, 52c) peut être maintenue par ledit angle dudit élément de came (81) par rapport audit verrou (80).

3. Siège inclinable à basculement/abaissement pour un véhicule selon la revendication 1 ou 2, dans lequel ladite partie inférieure dudit élément de came (81) est formée dans une forme sensiblement semi-elliptique, une surface infé-rieure de ladite partie d'étage se mettant en prise (80c) dudit verrou (80) est formée de manière à avoir sensiblement une forme en J qui permet à ladite partie inférieure dudit élément de came (81) d'être facilement aboutée contre ladite partie d'étage se mettant en prise (80c) dudit verrou (80), et ladite partie d'évidement (80d) dudit verrou (80) est formée de manière à avoir sensiblement une forme en U qui a une profondeur plus grande que la hauteur de ladite région en prise entre ladite dent saillante (80b) et chacune desdites dents de découpe (52a, 52c) et s'adapte à ladite partie inférieure dudit élé-ment de came (80).

4. Siège inclinable à basculement/abaissement pour véhicule selon la revendication 1, dans lequel ladite partie de pied (6) est typiquement amenée vers une position rangée sous ledit coussin de siège (5) par un ressort (10) qui est retenu à une extrémité de celui-ci sur une région d'extrémité supérieure de ladite partie de pied (6) et retenue à l'autre extrémité de celui-ci sur ledit au moins un (5') desdits deuxièmes sup-ports latéraux espacés et ledit siège de véhicule comprend en outre un troisième câble filaire (11) qui est couplé à une partie d'extrémité d'un fil (11a) de celui-ci à ladite région d'extrémité supérieure de ladite partie de pied (6) et couplée à l'autre partie d'extrémité dudit fil (11a) dudit troisième câble filaire (11) audit dossier de siège (1), de sorte que lorsque ledit moyen de verrouillage à basculement est déver-rouillé et ledit coussin de siège (5) est basculé vers le haut, ledit fil (11a) dudit troisième câble filaire (11) est poussé de manière à surmonter une action dudit ressort (10) et permet à ladite partie de pied (6) d'être pivotée vers une position développée et lorsque ledit coussin de siège (5) est pivoté vers ladite position bas-culée vers le haut, ladite action dudit ressort (10) est exercée sur ledit fil (11a) dudit troisième câble filaire (11).

5. Siège inclinable à basculement/abaissement pour véhicule selon l'une quelconque des reven-dications 1 à 4, dans lequel ledit moyen de verrouillage à basculement est également apte à verrouiller de manière libérable ledit coussin de siège à une position de milieu entre ladite position basculée vers le haut et ladite position utilisée et comprend en outre une troisième dent de découpe (52d) fournie audit bord sensiblement en forme d'arc semi-circulaire dudit au moins un (5') desdits deuxièmes supports latéraux espacés de manière à être agencée entre lesdites première et deuxième dents de découpe (52a, 52c) et ser-vant de moyen pour faciliter le verrouillage dudit coussin de siège (5) à ladite position de milieu, ladite dent saillante (80b) dudit verrou (80) étant apte à être mise en prise de manière sélec-tive et libérable avec lesdites première, deuxième et troisième dents de découpe (52a, 52c, 52b) ;
- ladite première plaque de liaison (73) a un trou de contrôle sensiblement en forme de L (79) qui comprend une partie de trou se mettant en prise horizontale (79a) et une partie de trou verticale (79b) s'étendant verticalement de manière à continuer de ladite partie de trou se mettant en prise horizontale (79a) ;
- ledit premier moyen de libération comprend en outre une deuxième liaison de freinage (74) montée à une partie de milieu de celui-ci sur ladite plaque de liaison (73) de telle manière qu'une partie inférieure de ladite deuxième liaison de freinage (74) est apte à être aboutée contre ladite broche de butée (51) à partir d'une direction opposée à la direction dans laquelle ladite partie inférieure de ladite première liaison de freinage (71) est aboutée contre ladite broche de butée (51), et une barre allongée (75) supportée de manière rétractable sur une partie d'extrémité supé-rieure de ladite deuxième liaison de freinage (74) et ayant une broche de rétention de fil (76) se projetant latéralement de ladite barre allongée (75) à une extrémité libre de celle-ci, ladite broche de rétention de fil (76) étant insérée à travers ledit trou de contrôle (79) de ladite première plaque de liaison (73) ; et
- ledit premier câble filaire (7a) est raccordé à ladite première broche de rétention de fil (76) de ladite barre allongée (75), de sorte que ledit premier levier de commande (7) est couplé, par l'intermédiaire dudit fil (7a) dudit pre-mier câble filaire et ladite broche de réten-tion de fil (76) insérée à travers ledit trou de contrôle (79) de ladite première plaque de liaison (73), à ladite première plaque de liaison (73).
